# EUROPEAN PATENT APPLICATION

(11) **EP 4 848 795 A1**
(43) Date of publication of application: **02.12.2026**
(21) Application number: 24920343.1
(22) Date of filing: 25.01.2024
(51) Int. Cl.: H04W 24/10, H04W 16/28, H04W 72/0457

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing, 100190 (CN)
(74) Representative: Hoffmann Eitle
(86) International application number: PCT/JP2024/002231
(87) International publication number: WO 2025/158621

(57) **Abstract**

A terminal according to one aspect of the present disclosure includes: a receiving section that receives a configuration for beam measurement for each component carrier (CC); and a control section that performs beam measurement according to the configuration, and controls triggering of beam reporting, based on a specific event. The specific event is based on a result of comparison between a measurement result of a beam of a serving cell or a candidate cell and a threshold.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied to use L1L2-triggered mobility (LTM) defined in Rel. 18 when a terminal (user terminal, User Equipment (UE)) moves between cells.

In mobility of Rel. 19 or later versions, various use cases are assumed. For example, for an industrial communication system, cases of remote control of industrial equipment, factory automation, and the like are exemplified. For real-time interactive services, AI-based/XR services are exemplified.

For future radio communication systems, it is also studied to support event-based beam reporting.

Event-triggered beam reporting may be supported in MIMO/mobility of Rel. 19 or later versions. Conditional handover (CHO) may also be supported as one aspect of mobility.

In other words, event-triggered beam reporting can be used for measurement reporting/beam switching/cell switching.

Meanwhile, it is assumed that the type of beam reporting supported for each use case is different.

For example, in event-triggered beam reporting for MIMO of Rel. 19, type 1/type 2-1 beam reporting is supported. In event-triggered beam reporting for mobility of Rel. 19, type 2-2 beam reporting is supported.

However, study of definitions related to event-based beam reporting according to a use case to be applied is not sufficient. Unless such study is sufficient, communication with lower latency cannot be performed, which may cause improvement of communication quality/throughput to be suppressed.

Thus, an object of the present disclosure is to provide a terminal, a radio communication method, and a base station that can improve communication quality/throughput.

### Solution to Problem

A terminal according to one aspect of the present disclosure includes: a receiving section that receives a configuration for beam measurement for each component carrier (CC); and a control section that performs beam measurement according to the configuration, and controls triggering of beam reporting, based on a specific event. The specific event is based on a result of comparison between a measurement result of a beam of a serving cell or a candidate cell and a threshold.

### Advantageous Effects of Invention

According to one aspect of the present disclosure, it is possible to improve communication quality/throughput.

### Brief Description of Drawings

[FIG. 1] FIG. 1A and FIG. 1B show examples of a unified/common TCI framework.
[FIG. 2] FIG. 2A and FIG. 2B show examples of DCI-based TCI state indication.
[FIG. 3] FIG. 3 is a diagram to show an example of a timeline of switching/activation of a TCI state defined in Rel. 15/16 or earlier versions.
[FIG. 4] FIG. 4 is a diagram to show an example of a TCI state defined in Rel. 16 or earlier versions.
[FIG. 5] FIG. 5A is a diagram to show an example of movement of a UE in Rel. 17. FIG. 5B is a diagram to show an example of movement of a UE in Rel. 18.
[FIG. 6] FIG. 6 is a flowchart to show an example of processing of event-based beam reporting.
[FIG. 7] FIG. 7 is a diagram to show an example of associations between SSBs/CSI-RSs and TCI states according to aspect 2-1.
[FIG. 8] FIG. 8 is a diagram to show an example of associations between SSBs/CSI-RSs and TCI states according to aspect 2-2.
[FIG. 9] FIG. 9 is a diagram to show an example of associations between SSBs/CSI-RSs and TCI states according to aspect 2-3.
[FIG. 10] FIG. 10 is a diagram to show an example of event-triggered beam reporting according to aspect 4-1B.
[FIG. 11] FIG. 11A to FIG. 11C are diagrams to show examples of event-triggered beam reporting according to aspect 5-2.
[FIG. 12] FIG. 12 is a diagram to show an example of event-triggered beam reporting according to aspect 5-3A.
[FIG. 13] FIG. 13 is a diagram to show an example of event-triggered beam reporting according to aspect 5-3B.
[FIG. 14] FIG. 14 is a diagram to show an example of event-triggered beam reporting according to aspect 5-3B.
[FIG. 15] FIG. 15 is a diagram to show an example of a schematic structure of a radio communication system according to one embodiment.
[FIG. 16] FIG. 16 is a diagram to show an example of a structure of a base station according to one embodiment.
[FIG. 17] FIG. 17 is a diagram to show an example of a structure of a user terminal according to one embodiment.
[FIG. 18] FIG. 18 is a diagram to show an example of a hardware structure of the base station and the user terminal according to one embodiment.
[FIG. 19] FIG. 19 is a diagram to show an example of a vehicle according to one embodiment.

### Description of Embodiments

### (CSI Reporting)

In NR, a UE measures a channel state by using a certain reference signal (or a resource for the reference signal) and feeds back (reports) channel state information (CSI) to a base station.

The UE may measure a channel state by using a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), or the like.

A CSI-RS resource may include at least one of a non-zero power (NZP) CSI-RS and CSI-Interference Management (IM). The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like. An SSB index may be given to the time position of an SSB in a half frame.

Note that the CSI may include at least one of a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, CQI) such as information determined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to CSI reporting (which may be referred to as CSI report configuration information) by using higher layer signaling, physical layer signaling (for example, downlink control information (DCI)), or a combination of these. The CSI report configuration information may be configured by using, for example, the RRC information element "CSI-ReportConfig."

The CSI report configuration information may include, for example, information related to reporting periodicity, an offset, and the like, which may be expressed in a certain time unit (slot unit, subframe unit, symbol unit, or the like). The CSI report configuration information may include a configuration ID (CSI-ReportConfigId). Parameters such as the type of a CSI reporting method (whether or not SP-CSI is used or the like), reporting periodicity, and the like may be identified by the configuration ID. The CSI report configuration information may include information (CSI-ResourceConfigId) indicating which signal (or a resource for which signal) is used to report measured CSI.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

QCL information as those indicated in QCL types A to D described above may be referred to as a QCL property.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, it may be supported to indicate one common beam by RRC/MAC CE/DCI, and the one common beam may be applied to a plurality of DL/UL channels/reference signals. In Rel. 18 or later versions, another case may be supported.

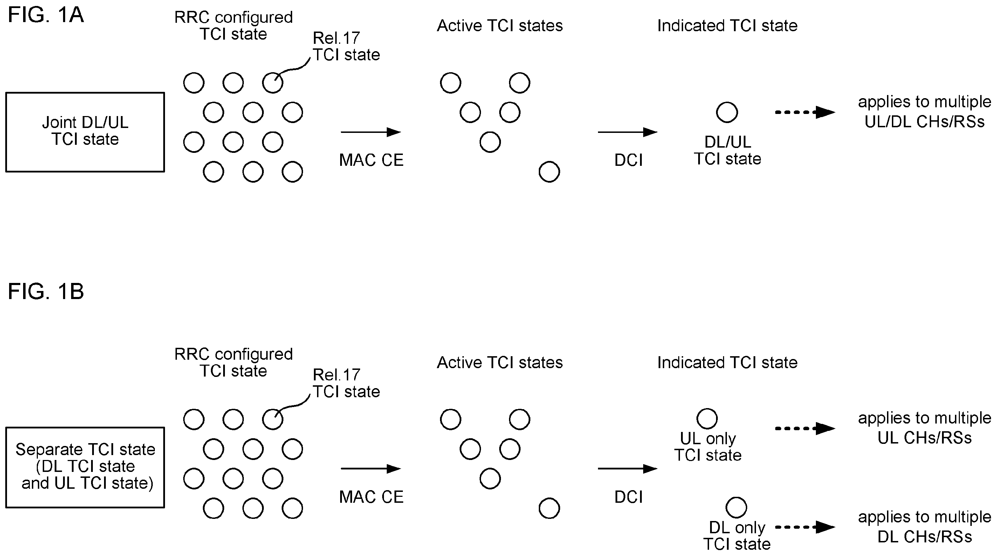

FIG. 1A and FIG. 1B show examples of a unified TCI framework. FIG. 1A shows an example of a joint DL/UL TCI state, and FIG. 1B shows an example of a separate TCI state (for example, DL TCI state and UL TCI state).

In the example in FIG. 1A, an RRC parameter (information element) configures a plurality of TCI states for both DL and UL. In the present disclosure, TCI states configured by the RRC parameter may be referred to as configured TCI states. The MAC CE may activate a plurality of TCI states among the plurality of configured TCI states. DCI may indicate one of the plurality of activated TCI states. In the present disclosure, the TCI state indicated by the DCI may be referred to as an indicated TCI state.

The DCI may be UL DCI (for example, DCI used for scheduling of a PUSCH) or may be DL DCI (for example, DCI used for scheduling of a PDSCH). The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

A method of configuring/indicating a TCI state (for example, a joint DL/UL TCI state) in FIG. 1A and a method of configuring/indicating application of a TCI state (for example, a separate TCI state) in FIG. 1B may be switched for application. Which of the joint DL/UL TCI state and the separate TCI state is applied may be configured by a higher layer parameter from a base station to a UE.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

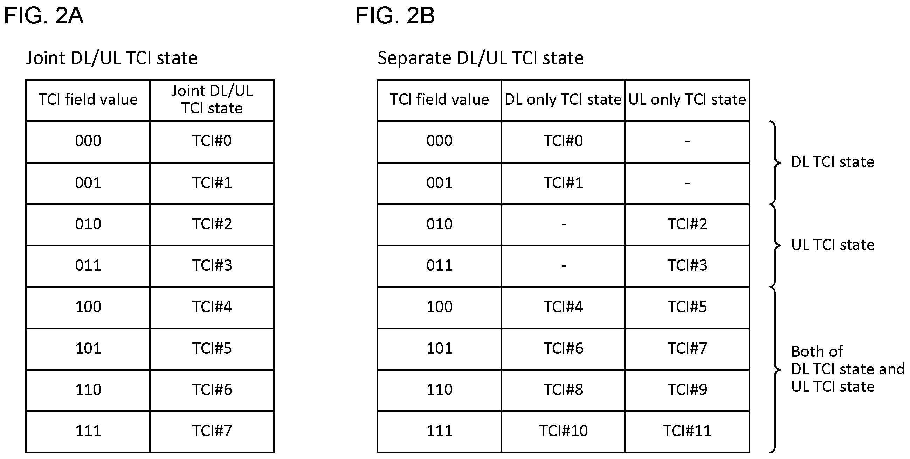

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (Switching of TCI State)

In Rel. 15/16, a delay time for switching of an active TCI state is defined for a UE configured with one or more TCI states in a serving cell.

Even when a UE measures/stores/holds a QCL property, a network (NW, for example, a BS) cannot recognize whether the UE measures/stores/holds the QCL property unless the UE reports an L1-RSRP report/beam report to the NW. Hence, the UE needs to measure a beam/RS for reporting, and the UE and the NW need to have common recognition as to whether a TCI state is known or unknown.

In Rel. 16, a TCI state being known is to satisfy condition 0 to condition 5 below:
(Condition 0): In a period from the last transmission of an RS resource used for reporting L1-RSRP measurement of a target TCI state to completion of switching of an active TCI state, an RS resource for L1-RSRP measurement is an RS of the target TCI state or an RS in a QCL relationship with the target TCI state.
(Condition 1): A TCI state switch command is received within a 1280 ms from the last transmission of an RS resource for beam reporting or measurement.
(Condition 2): A UE has transmitted at least one L1-RSRP report for the target TCI state before the TCI state switch command.
(Condition 3): The TCI state remains detectable during the switching period of the TCI state.
(Condition 4): An SSB associated with the TCI state remains detectable during the switching period of the TCI state.
(Condition 5) The Signal to Noise Ratio (SNR) of the TCI state is equal to or greater than -3 dB.

A TCI state being unknown means that the TCI state is not known.

Note that, in the present disclosure, a TCI state that is known may be referred to as a "known TCI state," and a TCI state that is unknown may be referred to as an "unknown TCI state."

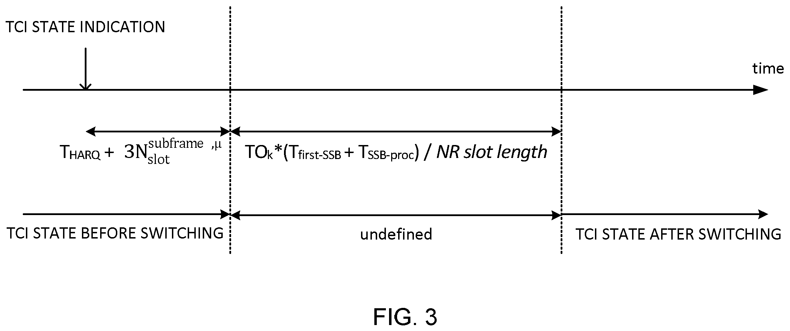

When a MAC CE is used for switching of a TCI state (MAC-CE based TCI state switch), and a target TCI state (switching-destination TCI state) is a known TCI state, a UE receives, upon receipt of a physical downlink shared channel (PDSCH) including an activation command (TCI state indication) of a TCI state in slot n, a physical downlink control channel (PDCCH) of the target TCI state of the serving cell in which switching of a TCI state has occurred in the first slot after slot n + T_{HARQ} + 3N^{subframe,µ}ₛₗₒₜ + TOₖ * (T_{first-SSB} + T_{SSB-proc})/(NR slot length). The UE can receive a PDCCH in the old TCI state (before switching) until slot n + T_{HARQ} + 3N^{subframe,µ}ₛₗₒₜ. In a period from slot n + T_{HARQ} + 3N^{subframe,µ}ₛₗₒₜ to slot n + T_{HARQ} + 3N^{subframe,µ}ₛₗₒₜ + TOₖ * (T_{first-SSB} + T_{SSB-proc})/(NR slot length), the TCI state applied by the UE is not defined (see FIG. 3).

Here, T_{HARQ} indicates timing from transmission of a downlink data signal (for example, a PDSCH) to transmission acknowledgment information (for example, HARQ-ACK information). Ns^{ubframe,µs}ₗₒₜ denotes the number of slots per subframe for a subcarrier configuration µ. Tf_{irst-SSB} denotes the time until when the UE first transmits an SSB after decoding of the MAC CE command used for activation of the TCI state. TS_{SB-proc} is 2 ms. TOk is 1 when the target TCI state is not included in a list of active TCI states for PDSCH, and is 0 otherwise. NR slot length denotes the length of a slot.

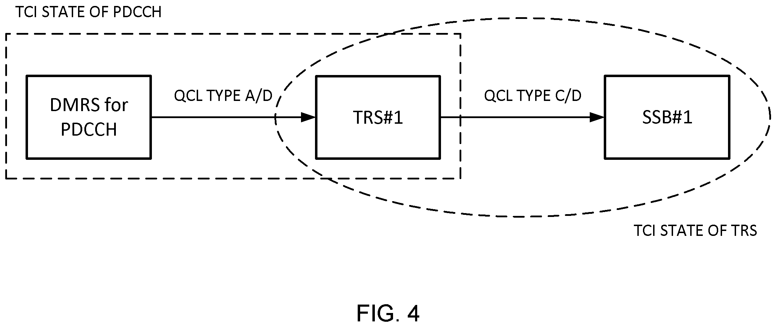

FIG. 4 is a diagram to show an example of a TCI state defined in Rel. 16 or earlier versions. As shown in FIG. 4, the TCI state of a PDCCH indicates the relationship of QCL type A/D between a demodulation reference signal (DMRS) for PDCCH and a TRS (or a CSI-RS, here, TRS #1). The TCI state of a TRS indicates the relationship between the TRS, an SSB (here, SSB #1), and QCL type C/D.

When a MAC CE is used for switching of a TCI state, and a target TCI state is an unknown TCI state, a UE receives, upon receipt of a PDSCH including an activation command of a TCI state in slot n, a PDCCH of the target TCI state of the serving cell in which switching of a TCI state has occurred in the first slot after slot n + T_{HARQ} + 3N^{subframe,µ}ₛₗₒₜ + T_{L1-RSRP} + TOᵤₖ * (T_{first-SSB} + T_{SSB-proc})/(NR slot length). The UE can receive a PDCCH in the old TCI state (before switching) until slot n + T_{HARQ} + 3N^{subframe,µ}ₛₗₒₜ.

Here, TOᵤₖ is 1 for L1-RSRP measurement using a CSI-RS or for switching of a TCI state configured with a QCL type other than QCL type D. In contrast, TOᵤₖ is 0 for switching of a TCI state configured with at least QCL type D and L1-RSRP measurement using an SSB.

T_{first-SSB} is a time until an SSB is transmitted first after L1-RSRP measurement in a case of performing switching of a TCI state configured with at least QCL type D. Alternatively, T_{first-SSB} denotes the time until when the UE first transmits an SSB after decoding of the MAC CE command used for activation of the TCI state configured with a QCL type other than QCL type D.

Compared with a case where a target TCI state is a known TCI state, when a target TCI state is an unknown TCI state, the time of T_{L1-RSRP} is additionally required for switching of the TCI state. T_{L1-RSRP} is a time associated with received power measurement. TL_{1-RSRP} is 0 in a case of frequency range (FR) 1 or a case of FR2 not configured with QCL type D. Otherwise, T_{L1-RSRP} is the time required for determination/refinement of a received beam in FR2.

When downlink control information (DCI) is used for switching of a TCI state (DCI based TCI state switch), and a target TCI state is a known TCI state, a UE receives, upon configuration of the higher layer parameter tci-PresentInDCI for a CORESET scheduling a PDSCH at enabled for the UE in slot n, a PDSCH of the target TCI state of the serving cell in which switching of a TCI state has occurred is received in the first slot after slot n + timeDurationForDCI. Here, timeDurationForDCI denotes the time required for reception of a PDCCH and application of information related to spatial relation/QCL (spatial QCL information) to reception of DCI for the PDSCH.

Further, when RRC signaling is used for switching of a TCI state (RRC based TCI state switch), and a target TCI state is a known TCI state, a UE receives, upon receipt of a PDSCH transmitting an RRC activation command of a TCI state in slot n, a PDCCH of the target TCI state of the serving cell in which switching of a TCI state has occurred in the first slot after slot n + (T_{RRC_processing} + TOₖ * (T_{first-SSB} + T_{SSB-proc}))/(NR slot length).

Here, T_{RRC_processing} denotes delay related to RRC processing (RRC processing delay). Tf_{irst-SSB} denotes the time until the first SSB is transmitted after RRC processing of the UE. TS_{SB-proc,} TOₖ, and (NR slot length) are similar to those in the case of a known TCI state in switching of a TCI state using a MAC CE.

When RRC signaling is used for switching of a TCI state (RRC based TCI state switch), and a target TCI state is an unknown TCI state, a UE receives, upon receipt of a PDSCH transmitting an RRC activation command of a TCI state in slot n, a PDCCH of the target TCI state of the serving cell in which switching of a TCI state has occurred in the first slot after slot n + (T_{RRC_processing} + T_{L1-RSRP} + TOᵤₖ * (T_{first-SSB} + T_{SSB-proc}))/(NR slot length).

Here, T_{RRC_processing} denotes delay related to RRC processing (RRC processing delay). TS_{SB-proc,} TOᵤₖ, and (NR slot length) are similar to those in the case of an unknown TCI state in switching of a TCI state using a MAC CE.

T_{first-SSB} is a time until an SSB is transmitted first after L1-RSRP measurement in a case of performing switching of a TCI state configured with at least QCL type D. Alternatively, T_{first-SSB} denotes the time until when the UE first transmits an SSB after decoding of the MAC CE command used for activation of the TCI state configured with a QCL type other than QCL type D.

Rel. 17 defines a delay time for switching related to a unified TCI state.

For example, when an RRC parameter (DLorJoint-TCIState) related to a unified TCI State for a DL channel of a serving cell is configured for a UE, the defined delay time may be applied.

In MR-DC or standalone NR, the delay time is also applied to all lists of a plurality of serving cells in a simultaneous TCI update list (for example, simultaneousU-TCI-UpdateList1, simultaneousU-TCI-UpdateList2, simultaneousU-TCI-UpdateList3, simultaneousU-TCI-UpdateList4) in a plurality of CCs/cells.

When a target DL TCI state refers to an additional physical cell ID (PCI) different from the PCI of the serving cell configured with this DL TCI state, the delay time may be applied under the condition that the following conditions are satisfied:
- The active BWPs of the serving cell and the cell of the additional PCI are the same.
- The center frequency, subcarrier spacing (SCS), and a system frame number (SFN) offset of the cell of the additional PCI are the same as those of the serving cell.
- The cell of the additional PCI is known to the UE.

When the following conditions are satisfied, the cell of the additional PCI may be known:
- In the last 5 seconds before configuration of L1-RSRP measurement, the UE has transmitted a valid L3 measurement report for the cell of the additional PCI.
- The timing offset between the serving cell and the cell of the additional PCI is within the CP of the corresponding SCS.

When the conditions are not satisfied, the cell of the additional PCI may be unknown.

A DL TCI state in a unified TCI state being known may be that the following conditions are satisfied:
- In a period from the last transmission of an RS resource used for reporting L1-RSRP measurement of a target DL TCI state to completion of switching of an active DL TCI state, an RS resource for L1-RSRP measurement is an RS of the target DL TCI state or an RS in a QCL relationship with the target DL TCI state.
- A DL TCI state switch command (downlink TCI state switch command) is received within a 1280 ms from the last transmission of an RS resource for beam reporting or measurement.
- A UE has transmitted at least one L1-RSRP report for the target DL TCI state before the DL TCI state switch command.
- The DL TCI state remains detectable during the switching period of the DL TCI state.
- An SSB associated with the DL TCI state remains detectable during the switching period of the DL TCI state.
- The Signal to Noise Ratio (SNR) of the DL TCI state is equal to or greater than -3 dB.

The SSB may be associated with the PCI of the serving cell or a PCI different from the serving cell PCI.

When the above conditions are not satisfied, the DL TCI state may be unknown.

In a case of joint TCI state switching, when a target PL-RS is not maintained, reception in DL based on a target TCI state need not be expected for the UE before switching of DL and UL TCI states is completed.

When a MAC CE is used for switching of a DL TCI state (MAC-CE based downlink TCI state switch), and a target TCI state (switching-destination TCI state) is a known TCI state, a UE receives, upon receipt of a PDSCH including an activation command (TCI state indication) of a TCI state in slot n, a physical downlink control channel (PDCCH) of the target TCI state of the serving cell in which switching of a TCI state has occurred in the first slot after slot n + T_{HARQ} + 3N^{subframe,µ}ₛₗₒₜ + TOₖ * (T_{first-SSB} + T_{SSB-proc})/(NR slot length). The UE can receive a UE-specific PDSCH/PDCCH by using the old TCI state (before switching) until slot n + T_{HARQ} + 3N^{subframe,µ}ₛₗₒₜ. In a period from slot n + T_{HARQ} + 3N^{subframe,µ}ₛₗₒₜ to slot n + T_{HARQ} + 3N^{subframe,µ}ₛₗₒₜ + TOₖ * (T_{first-SSB} + T_{SSB-proc})/(NR slot length), the TCI state applied by the UE is not defined.

Here, T_{HARQ} indicates timing from transmission of a downlink data signal (for example, a PDSCH) to transmission acknowledgment information (for example, HARQ-ACK information). Ns^{ubframe,µs}ₗₒₜ denotes the number of slots per subframe for a subcarrier configuration µ. Tf_{irst-SSB} denotes the time until when the UE first transmits an SSB after decoding of the MAC CE command used for activation of the TCI state. TS_{SB-proc} is 2 ms. TOk is 1 when the target TCI state is not included in a list of active TCI states for PDSCH, and is 0 otherwise. NR slot length denotes the length of a slot.

When a MAC CE is used for switching of a DL TCI state, and a target TCI state is an unknown TCI state, a UE receives, upon receipt of a PDSCH including an activation command of a TCI state in slot n, a PDCCH of the target TCI state of the serving cell in which switching of a TCI state has occurred in the first slot after slot n + T_{HARQ} + 3N^{subframe,µ}ₛₗₒₜ + T_{L1-RSRP} + TOᵤₖ * (T_{first-SSB} + T_{SSB-proc})/(NR slot length). The UE can receive a UE-specific PDSCH/PDCCH by using the old TCI state (before switching) until slot n + T_{HARQ} + 3N^{subframe,µ}ₛₗₒₜ.

Here, TOᵤₖ is 1 for L1-RSRP measurement using a CSI-RS or for switching of a TCI state configured with a QCL type other than QCL type D. In contrast, TOᵤₖ is 0 for switching of a TCI state configured with at least QCL type D and L1-RSRP measurement using an SSB.

T_{first-SSB} is a time until an SSB is transmitted first after L1-RSRP measurement in a case of performing switching of a TCI state configured with at least QCL type D. Alternatively, T_{first-SSB} denotes the time until when the UE first transmits an SSB after decoding of the MAC CE command used for activation of the TCI state configured with a QCL type other than QCL type D.

Compared with a case where a target TCI state is a known TCI state, when a target TCI state is an unknown TCI state, the time of T_{L1-RSRP} is additionally required for switching of the TCI state. T_{L1-RSRP} is a time associated with received power measurement. TL_{1-RSRP} is 0 in a case of frequency range (FR) 1 or a case of FR2 not configured with QCL type D. Otherwise, T_{L1-RSRP} is the time required for determination/refinement of a received beam in FR2.

For example, when an RRC parameter (DLorJoint-TCIState (case where unifiedTCI-StateType indicates Joint) related to a unified TCI state for a UL channel/signal of a serving cell or UL-TCIState) is configured for a UE, the defined delay time may be applied.

In MR-DC or standalone NR, the delay time is also applied to all lists of a plurality of serving cells in a simultaneous TCI update list (for example, simultaneousU-TCI-UpdateList1, simultaneousU-TCI-UpdateList2, simultaneousU-TCI-UpdateList3, simultaneousU-TCI-UpdateList4) in a plurality of CCs/cells.

For a UL TCI state (or a joint TCI state), the cell of the additional PCI being known/unknown and a UL TCI state being known/unknown are the same as the cell of the additional PCI and the TCI state for a DL TCI state being known/unknown above with "DL TCI state" being interpreted as "UL TCI state (or joint TCI state)."

For joint TCI state switching, transmission in UL need not be expected for the UE before switching of DL and UL TCI states is completed.

When a MAC CE is used for switching of a separate UL TCI state/joint TCI state for UL channel/signal (MAC-CE based uplink TCI state switch), and a target TCI state (switching-destination TCI state) is a known TCI state, the UE can transmit, upon receipt of a PDSCH including an activation command (TCI state indication) of a TCI state in slot n, a UL signal of the target TCI state in slot n + T_{HARQ} + 3N^{subframe,µ}ₛₗₒₜ + NM * (T_{first-target-PL-RS} + 4 * T_{target-PL-RS} + 2 ms)/(NR slot length). Here, the UL channel/signal may be a PUCCH, a PUSCH, or a semi-persistent/periodic/aperiodic SRS (when beamCorrespondenceWithoutUL_BeamSweeping is set to 1).

When a MAC CE is used for switching of a separate UL TCI state/joint TCI state for UL channel/signal, and a target TCI state is an unknown TCI state, the UE can transmit, upon receipt of a PDSCH including an activation command (TCI state indication) of a TCI state in slot n, a UL signal of the target TCI state in slot n + T_{HARQ} + 3N^{subframe,µ}ₛₗₒₜ + (T_{L1-RSRP} + T_{first-target-PL-RS} + 4 * T_{target-PL-RS} + 2 ms)/(NR slot length).

Here, T_{HARQ} indicates timing from transmission of a downlink data signal (for example, a PDSCH) to transmission acknowledgment information (for example, HARQ-ACK information). Ns^{ubframe,µs}ₗₒₜ denotes the number of slots per subframe for a subcarrier configuration µ. NR slot length denotes the length of a slot.

NM is 1 when a target PL-RS is maintained, and is 0 otherwise.

When the target TCI state is unknown, T_{target-PL-RS} denotes the time until the first pathloss RS is transmitted after L1-RSRP measurement. When the target TCI state is known, T_{target-PL-RS} denotes the time until the first path loss RS is transmitted after decoding of a MAC CE command by the UE.

T_{target-PL-RS} denotes periodicity of the target PL-RS, which is an SSB or an NZP CSI-RS, when the PL-RS is associated with the serving cell. Tt_{arget-PL-RS} denotes periodicity of a PL-RS being an SSB, when the PL-RS is associated with a PCI different from that of the serving cell.

Compared with a case where a target TCI state is a known TCI state, when a target TCI state is an unknown TCI state, the time of T_{L1-RSRP} is additionally required for switching of the TCI state. T_{L1-RSRP} is a time associated with received power measurement. TL_{1-RSRP} is 0 in a case of frequency range (FR) 1 or a case of FR2 not configured with QCL type D. Otherwise, T_{L1-RSRP} is the time required for determination/refinement of a received beam in FR2.

### (L1/L2 Inter-cell Mobility)

It is studied that the UE performs UL transmission to one or a plurality of cells/TRPs. As a procedure of this case, scenario 1 or scenario 2 below is conceivable. Note that in the present disclosure, a serving cell may be interpreted as a TRP in a serving cell. layer1/layer2 (L1/L2) and DCI/Medium Access Control Control Element (MAC CE) may be interchangeably interpreted. In the present disclosure, a physical cell ID (Physical Cell Identity (PCI)) different from that of the current serving cell may be simply referred to as a "different PCI." A non-serving cell, a cell having a different PCI, and an additional cell may be interchangeably interpreted.

### <Scenario 1>

Scenario 1 corresponds to, for example, inter-cell mobility of multi-TRP but may be a scenario that does not correspond to inter-cell mobility of multi-TRP.

(1) A UE receives, from a serving cell, a configuration of an SSB for beam measurement of a TRP corresponding to a PCI different from that of the serving cell, and a configuration necessary for using radio resources for data transmission and/or reception including the resource of the different PCI.
(2) The UE performs beam measurement of the TRP corresponding to the different PCI, and reports a beam measurement result to a serving cell.
(3) Based on the above report, transmission configuration indication (TCI) state associated with the TRP corresponding to the different PCI is activated by L1/L2 signaling from the serving cell.
(4) The UE performs transmission and reception by using a UE dedicated channel on the TRP corresponding to the different PCI.
(5) The UE needs to always cover the serving cell, including a case of multi-TRP. The UE needs to use a common channel (broadcast control channel (BCCH), paging channel (PCH)) from the serving cell and the like, as in a known system.

In scenario 1, when the UE transmits or receives a signal to/from an additional cell/TRP (TRP corresponding to the PCI of the additional cell), the serving cell (assumption of the serving cell in the UE) is not changed. The UE is configured with a higher layer parameter related to the PCI of a non-serving cell, by the serving cell. Scenario 1 may be applied in Rel. 17, for example.

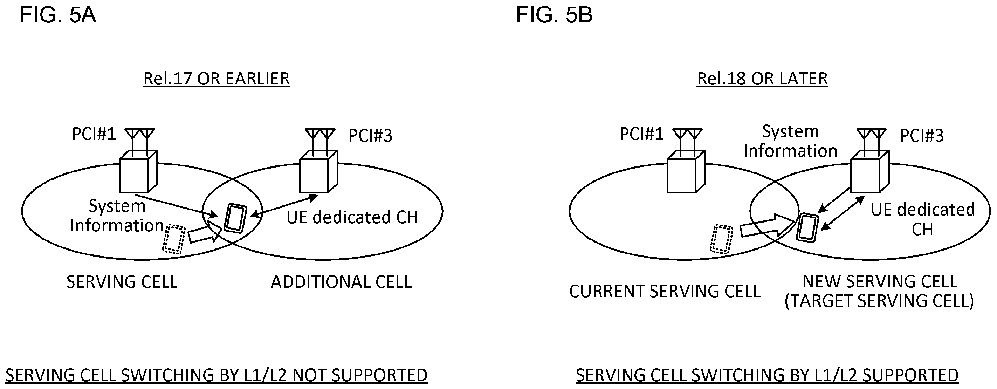

FIG. 5A is a diagram to show an example of movement of a UE in Rel. 17. A case is assumed where the UE moves from the cell (serving cell) of PCI #1 to the cell (additional cell) of PCI #3 (overlapping the serving cell). In this case, in Rel. 17, switching of a serving cell in accordance with L1/L2 is not supported.

The additional cell is a cell having an additional PCI different from the PCI of the serving cell. The UE can receive/transmit a UE dedicated channel from/to the additional cell. The UE needs to be within the coverage of the serving cell to receive a UE common channel (for example, system information/paging/short message). When the UE moves out of the coverage of the serving cell, cell switching is required due to handover (also referred to as L3 mobility) or the like.

### <Scenario 2>

In scenario 2, L1/L2 inter-cell mobility is applied. In L1/L2 inter-cell mobility, serving cell change is possible by using a function such as beam control without RRC reconfiguration. In other words, transmission and reception with an additional cell is possible without handover. Since a data incommunicable period occurs due to the necessity of RRC reconnection and the like for handover, L1/L2 inter-cell mobility with no necessity of handover is applied to enable data communication to continue even at the time of serving cell change. Scenario 2 may be applied in Rel. 18, for example. In scenario 2, for example, the following procedure is performed.

(1) A UE receives, from a serving cell, the configuration of the SSB of the cell (additional cell) having a different PCI, for beam measurement/serving cell change.
(2) The UE performs beam measurement of the cell using the different PCI, and reports a measurement result to the serving cell.
(3) The UE may receive the configuration of the cell having the different PCI (serving cell configuration) by higher layer signaling (for example, RRC). In other words, an advance configuration related to serving cell change may be performed. This configuration may be performed together with the configuration in (1) or may be performed separately.
(4) Based on the above report, the TCI state of the cell having the different PCI may be activated by L1/L2 signaling according to the change of the serving cell. The TCI state activation and the serving cell change may be performed separately.
(5) The UE changes the serving cell (assumption of the serving cell) and initiates reception/transmission using a UE-specific channel and a TCI state configured in advance.

In other words, in scenario 2, a serving cell (assumption of a serving cell in the UE) is updated by L1/L2 signaling. Scenario 2 may be applied in Rel. 18.

FIG. 5B is a diagram to show an example of movement of a UE in Rel. 18. In Rel. 18, a serving cell is switched by L1/L2 (for example, DCI/MAC CE). The UE can receive/transmit a UE-dedicated channel/common channel from/to a new serving cell (or a target serving cell). The UE may be out of the coverage of the current serving cell.

### (Type of Beam Reporting)

### <Intra-cell Beam Reporting of Rel. 15/16>

In Rel. 15/16, intra-cell beam reporting is supported. For example, L1-RSRP/SINR reporting may be configured by higher layer signaling (RRC).

For example, in calculation of an L1-RSRP, when a resource is associated with QCL type C/type D, a UE may be configured with either or both of a CSI-RS resource and an SS/PBCH block resource.

The UE may be configured with up to 16 CSI-RS resource sets with up to 64 resources in each set. In all resource sets, a total of different CSI-RS resources is 128 or less.

In the L1-RSRP reporting, when the higher layer parameter nrofReportedRS (for example, in CSI-ReportConfig) is configured at 1, an L1-RSRP value to be reported is defined by a 7-bit value in the range of [-140 to -44] dBm with a step size of 1 dB.

Here, the largest measurement value of an L1-RSRP is quantized to a 7-bit value in the range of [-140 to -44] dBm with a step size of 1 dB. The difference value of an L1-RSRP is quantized to a 4-bit value.

The differential value calculated with a step size of 2 dB with reference to the largest measurement value that is a part of the same L1-RSRP reporting instance.

For example, in L1-SINR calculation and channel measurement, the UE may be configured with either or both of an NZP CSI-RS resource and an SS/PBCH block resource. For interference measurement, the UE may be configured with an NZP CSI-RS resource or a CSI-IM resource.

For channel measurement, the UE may be configured with CSI resource setting related to up to 64 CSI resources or up to 16 CSI-RS resource sets with SS/PBCH block resources.

In L1-SINR reporting, when the higher layer parameter nrofReportedRS is configured at 1, an L1-SINR value to be reported is defined as a 7-bit value in the range of [-23 to 40] dBm with a step size of 0.5 dB.

When the higher layer parameter nrofReportedRS is configured to be larger than 1, or when the higher layer parameter groupBasedBeamReporting is configured at "enabled," the UE uses a differential-value-based L1-SINR value for reporting.

The differential value is calculated with a step size of 1 dB with reference to the largest measurement value that is a part of the same L1-SINR reporting instance.

In the present disclosure, the intra-cell beam reporting of Rel. 15/16 (which may be simply referred to as an intra-cell beam reporting) may be referred to as type 1 beam reporting (beam reporting type 1) or beam reporting for intra-cell beam switching.

### <Inter-cell Beam Reporting of Rel. 17>

As described above, in Rel. 17, L1/L2 inter-cell mobility is supported. For example, a UE can transmit and receive a UL/DL channel/signal to and from a different PCI of a cell from the PCI of a serving cell. For example, when a non-serving cell has a larger RSRP than the serving cell, the UE can transmit and receive a UL/DL channel/signal to and from the non-serving cell without performing handover.

In L1-RSRP reporting, the absolute value/differential value of an L1-RSRP may be used as in Rel. 15/16. In inter-cell beam reporting (type 2-1 beam reporting to be described below) of Rel. 17, each L1-RSRP value and a PCI ID (for a serving cell/additional cell/candidate cell) are associated with each other. The association between each L1-RSRP value and the PCI ID may be configured/indicated by higher layer signaling/physical layer signaling.

The configuration by higher layer signaling supports up to seven additional cells. Note that ID = 0 means the PCI of a serving cell.

In the present disclosure, inter-cell beam reporting (in Rel. 17/18) may be referred to as type 2 beam reporting (beam reporting type 2). Type 2 beam reporting may be further classified into types 2-1 and 2-2 to be described below.

In the present disclosure, beam reporting of Rel. 17 may be referred to as type 2-1 beam reporting or beam reporting for inter-cell beam switching.

### <Inter-cell Beam Reporting of Rel. 18>

In beam reporting of Rel. 18, only SSB-based L1-RSRP reporting (beam reporting) is supported. Here, the number L of candidate cells may be any of one to four, and the number M of beams for each cell (per cell) may be any of one to four. For example, in beam reporting, a 7-bit absolute value (largest L1-RSRP value among all cells) is reported for one cell, and all remaining L1-RSRP values are reported as differential values.

For beam selection in SSB-based L1-RSRP reporting, the maximum value of M * L that can be configured by RRC for M and L described above, and the combination of M and L may depend on UE capability.

In L1-RSRP reporting, the absolute/differential value of an L1-RSRP may be used as in Rel. 15/16/17.

In L1-RSRP reporting, an L1-RSRP value to be reported is defined as a 7-bit value in the range of [-140 to -44] dBm with a step size of 1 dB.

Here, the largest measurement value of an L1-RSRP is quantized to a 7-bit value in the range of [-140 to -44] dBm with a step size of 1 dB. The difference value of an L1-RSRP is quantized to a 4-bit value.

The differential value calculated with a step size of 2 dB with reference to the largest measurement value that is a part of the same L1-RSRP reporting instance.

The L1-RSRP reporting includes an SSBRI between configured candidate cells. In other words, the L1-RSRP reporting includes the L1-RSRP corresponding to the SSBRI of the configured candidate cells. The format may be the same as that in an existing specification.

In the present disclosure, beam reporting of Rel. 18 may be referred to as type 2-2 beam reporting or beam reporting for cell switching. Note that information related to a PCI (PCI ID) is not included in type 2-2 beam reporting. Instead, the information related to a PCI may be included in an SSBRI. For example, when four cells include 64 SSBs, an SSBRI is any of {0, 1, ···, 255}.

### (Event-based Beam Reporting)

For future radio communication systems, it is studied to support event-based beam reporting. The event-based beam reporting may be referred to as event-triggered beam reporting (event triggered beam reporting) and may mean UE-initiated beam reporting.

The following events are examples of events defined in existing 5G NR. Note that the event is not limited to the contents given below, and another new event may be defined.
- Event A1: Case where a measurement result of a serving [cell] is better than a threshold.
- Event A2: Case where a measurement result of a serving [cell] is worse than a threshold.
- Event A3: Case where a measurement result of a neighbor [cell] (value obtained by adding an offset to the measurement result) is better than a measurement result of an SpCell (value obtained by adding an offset to the measurement result).
- Event A4: Case where a measurement result of a neighbor [cell] (value obtained by adding an offset to the measurement result) is better than a threshold.
- Event A5: Case where a measurement result of an SpCell is worse than a first threshold, and a measurement result of a neighbor [cell] (value obtained by adding an offset to the measurement result) is better than a second threshold.
- Event A6: Case where a measurement result of a neighbor [cell] (value obtained by adding an offset to the measurement result) is better than a measurement result of a serving cell (Secondary Cell (SCell)) (value obtained by adding an offset to the measurement result).
- Event B1: Case where a measurement result of an inter-RAT neighbor [cell] is better than a threshold.
- Event B2: Case where a measurement result of a PCell is worse than a first threshold, and a measurement result of an inter-RAT neighbor [cell] (value obtained by adding an offset to the measurement result) is better than a second threshold.

### <Applicable Cases>

Event-based beam reporting may be applied, for example, in at least one of case 1 and case 2 below:
- {Case 1}: L1-RSRP/SINR beam reporting including a serving cell PCI/additional PCI (for example, L1-RSRP/SINR beam reporting including a serving cell/additional PCI cell for L2/L1 intra-cell (inter-cell) mobility/intra-cell multi-TRP (M-TRP inter-cell)/Rel-18 L2/L1 mobility with cell switching).
- {Case 2}: L1-RSRP/SINR beam reporting including only a serving cell PCI.

When a specific event has occurred (in the present invention, this may be interpreted as a specific condition being satisfied/being not satisfied), a UE may report a measurement result (for example, an L1-RSRP/L1 SINR) to an NW (for example, a base station).

The specific event may be, for example, at least one of an event related to at least one of a serving cell and an additional cell, and an event related to beam reporting including at least one of the PCI of the serving cell and the PCI of the additional cell.

### <<Event for Case 1>>

An example of an event for case 1 above will be described. The event may mean, for example, an event related to the serving cell and the additional cell or an event related to beam reporting including the PCI of the serving cell and the PCI of the additional cell.

### {Option 1}

Beam reporting (for example, aperiodic CSI reporting) may be triggered by reusing one or a plurality of existing events of Radio Resource Management (RRM) (for example, at least one of events A2 to A6 and I1 below). Specifically, when at least one of events A2 to A6 and I1 below has occurred (when a condition of the event is satisfied), both RRM reporting and CSI reporting may be triggered, and the UE may transmit both an RRM report and a CSI report.

In the present disclosure, an RRM report may be interpreted as an L3 measurement report.

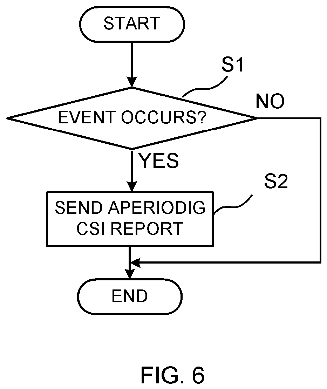

FIG. 6 is a flowchart to show an example of processing of event-based beam reporting. A UE determines whether an event (for example, at least one of events A2 to A6 and I1 below) has occurred (S1). When it is YES in S1, the UE transmits an aperiodic CSI report (and an RRM report) (S2). When it is NO, the UE terminates the processing related to event-based beam report. The processing of FIG. 6 may be repeatedly performed at certain intervals.

In the present disclosure, aperiodic CSI reporting being triggered and aperiodic CSI reporting being transmitted by a UE may be interchangeably interpreted. CSI reporting, L1 beam reporting, and beam reporting may be interchangeably interpreted.

In events from A2 to A6 below, a measurement result may be a measurement result of at least one of an RSRP (L1-RSRP/L3-RSRP), an RSRQ, and an SINR (RS-SINR). In the conditions of events A2 to A6 below, "bad" may mean "low," and "good" may mean "high." In the conditions of events A2 to A6 below, an SpCell may mean a special cell and may mean at least one of a Primary Cell (PCell) and a Primary Secondary Cell (PSCell). In events A2 to A6 and I1 below, a parameter corresponding to hysteresis may be added to/subtracted from a measurement result. The thresholds may be the same or may be different from each other. A neighbor (neighbour) cell may be a non-serving cell.

Event A2: A measurement result of a serving cell is worse than a threshold.

Event A3: A measurement result of a neighbor cell (value obtained by adding an offset to the measurement result) is better than a measurement result of an SpCell (value obtained by adding an offset to the measurement result).

Event A4: A measurement result of a neighbor cell (value obtained by adding an offset to the measurement result) is better than a threshold.

Event A5: A measurement result of an SpCell is worse than a first threshold, and a measurement result of a neighbor cell (value obtained by adding an offset to the measurement result) is better than a second threshold.

Event A6: A measurement result of a neighbor cell (value obtained by adding an offset to the measurement result) is better than a measurement result of a serving cell (Secondary Cell (SCell)) (value obtained by adding an offset to the measurement result).

Event I1: A measurement result of interference is higher than a threshold.

According to option 1, trigger of RRM reporting can be reused for trigger of beam reporting, and thus configuration is facilitated.

### {Option 2}

One or a plurality of new events (separate from events for RRM reporting) may be defined to trigger aperiodic L1 beam reporting (CSI reporting). The events are similar to events A2 to A6 and I1 above, which are also applied to trigger of RRM reporting but may be different from any of events A2 to A6 and I1 (trigger of RRM reporting) in at least one of options 2-1 to 2-4 below.

### {{Option 2-1}}

Thresholds may be different. Specifically, events A2 to A6 and I1 may be used for L1 beam reporting (CSI reporting) by using different thresholds from those for events for RRM reporting.

### {{Option 2-2}}

An event may occur based on a measurement result of a reference signal received power in layer 1 (L1-RSRP). In other words, a comparison may be performed based on an L3-RSRP instead of an L1-RSRP. Alternatively, an L1-RSRP subjected to new filtering with a time scale (update/measurement periodicity) between those of an L1-RSRP and an L3-RSRP (or same as that of the L3-RSRP or the L1-RSRP) may be applied. Alternatively, other metrics, for example, an L1-SINR, an L3-RSRQ, or the like may be applied. For example, as a new event, event A2' below may be applied:
Event A2': An L1-RSRP measurement result of a serving cell is worse than a threshold.

### {{Option 2-3}}

It may be based on a comparison with a single-beam-level, a plurality-of-beam-level (integrating independent measurement results of a plurality of beams into one value), or cell-level measurement result(s). For example, event A4' or event A4" may be applied:
Event A4': A measurement result of one beam from a neighbor cell is better than a threshold.

Event A4": A statistic (for example, the mean, the sum, or the like) of measurement results of a plurality of beams (for example, the best X beams) is better than a threshold. X may be fixed or may be configurable by higher layer signaling or the like.

### {{Option 2-4}}

The number of beams satisfying a condition (for example, any of events A2 to A6 and I1) may be considered. For example, when X beams satisfy event A4' (when measurement results of X beams from a neighbor cell are better than a threshold), the UE may perform CSI reporting.

Note that an example combining at least two of 2-1 to 2-4 above may be applied. For example, A4‴ is conceivable as an event combining 2-2 and 2-3. A4ʺʺ is conceivable as an event combining 2-2, 2-3, and 2-4:
Event A4‴: The L1-RSRP measurement result of one beam from a neighbor cell is better than a threshold.

Event A4ʺʺ: The L1-RSRP of each of X beams from a neighboring cell is better than a threshold.

According to option 2, CSI reporting can be performed at a higher speed than that in a case of using an event for existing RRM reporting using RRC.

### {Option 3}

Aperiodic L1 beam reporting (CSI reporting) may be triggered by using any combination of two or more events of option 1 and option 2 above.

An existing event for RRM reporting and one or more events of option B may be combined. For example, when both event A4 and new event A4‴ have occurred, CSI reporting may be triggered.

Two or more events of option 2 may be combined. For example, when both event A2' and new event A4‴ are satisfied, CSI reporting may be triggered.

### <<Event for Case 2>>

An example of an event for case 2 above will be described. The event may mean, for example, an event related only to a serving cell or an event related to beam reporting including only the PCI of the serving cell.

One or a plurality of new events (separate from events for RRM reporting) may be defined to trigger aperiodic L1 beam reporting (CSI reporting). The event may be at least one of events B2 to B6 and K1 below:
Event B2: A measurement result of a current beam is worse than a threshold.

Event B3: A measurement result of another beam (value obtained by adding an offset to the measurement result) is better than a measurement result of a current beam (value obtained by adding an offset to the measurement result).

Event B4: A measurement result of another beam (value obtained by adding an offset to the measurement result) is better than a threshold.

Event B5: A measurement result of a current beam is worse than a first threshold, and a measurement result of another beam (value obtained by adding an offset to the measurement result) is better than a second threshold.

Event B6: A measurement result of a current beam (value obtained by adding an offset to the measurement result) is worse than a threshold, and a measurement result of another beam (value obtained by adding an offset to the measurement result) is better than a measurement result of a current beam (value obtained by adding an offset to the measurement result).

Event K1: A measurement result of interference is higher than a threshold.

Note that names/reference signs (for example, A2 to A6, B2 to B6, I1, K1, and the like) related to events in the present disclosure are merely examples, and these examples are not restrictive. For example, the name of an event for case 2 and the name of a corresponding event for case 1 (in terms of number) may be the same.

Note that, for at least one of the events (events according to case 1/case 2) in the present disclosure, a duration/counter in which (a condition of) the event is satisfied may be defined. When at least one of the conditions of the events above satisfies a condition related to a specific duration/counter, a UE/NW may determine that the condition of the event is satisfied. For example, when a measurement result of another beam is better than a measurement result of a current beam in a time window of 100 ms, the UE may determine that the condition of event B3 above is satisfied. For example, when a measurement result of another beam is better than a measurement result of a current beam, 10 times per a plurality of samples, the UE may determine that the condition of B3 event above is satisfied.

In the present disclosure, a "current beam" may mean, for example, an SSB/CSI-RS having a QCL relationship (QCLed) with a PDCCH.

The PDCCH may be, for example, a PDCCH corresponding to a CORESET determined by a specific rule/higher layer parameter configuration. The CORESET may be, for example, the CORESET of a specific (for example, lowest/highest) CORESET ID.

The CSI-RS may be, for example, a periodic/semi-persistent/aperiodic CSI-RS. The SSB/CSI-RS may be limited to, for example, a periodic CSI-RS/SSB.

In the present disclosure, a "current beam" may be, for example, an indicated TCI state (joint/DL/UL TCI state) in a current unified TCI state. A "current beam" may be, for example, a QCL source RS (QCL type D/A) related to a current indicated TCI state.

In the present disclosure, a "current beam" may be, for example, a beam/resource index (for example, a CRI/SSBRI) reported in a specific (for example, recent/latest) L1-RSRP/L1-SINR.

In the present disclosure, "another beam" may be, for example, a beam/SSB/CSI-RS/TCI state other than a "current beam."

A set of a plurality of beams (candidate beam set) may be configured for a UE. The UE may select/determine "another beam" from the sets.

In the present disclosure, "bad/good (worse/better)" may mean, for example, a low/high (lower/higher) measurement result (for example, RSRP/SINR/RSRQ).

The threshold may be defined in advance in a specification, may be configured/indicated/notified by using higher layer signaling (RRC/MAC CE)/DCI, may be reported by UE capability, or may be defined by a combination of these. For example, the threshold may be reused as an existing threshold (for example, a threshold used in RRM/case 1).

The offset related to the threshold may be defined in advance in a specification, may be configured/indicated/notified by using higher layer signaling (RRC/MAC CE)/DCI, may be reported by UE capability, or may be defined by a combination of these.

Note that, in the present disclosure, UE-initiated (UE initiated) beam reporting, event-triggered beam reporting, event-based beam reporting, and event-based beam reporting may be interchangeably interpreted.

In the present disclosure, a beam to be reported, reported beam, and UE-reported beam may be interchangeably interpreted.

### (Cell Switch Command (MAC CE) of Rel. 18)

A cell switch command transmitted using a MAC CE may include at least the following information.
- Information for identifying a target cell,
- information related to timing advance (TA),
- one joint TCI state index for the target cell or a set of DL/UL TCI state indices for the target cell, and
- an active DL/UL BWP of the target cell.

For the presence of a beam indication in a cell switch command, the following may be supported for at least a given scenario.
- There is always a field, in the cell switch command, indicating one joint TCI state index for a target cell or one set of DL/UL TCI state indices for the target cell.
- UE operation related to beam indication field for RACH-based handover scenario after the cell switch command.

### (Analysis)

The event-triggered beam reporting described above may be supported in MIMO/mobility of Rel. 19 or later. Conditional handover (CHO) may also be supported as one aspect of mobility.

In other words, the event-triggered beam reporting can be used for measurement reporting/beam switching/cell switching.

It is also assumed that the type of beam reporting supported for each use case described above is different.

For example, in event-triggered beam reporting for MIMO of Rel. 19, type 1/type 2-1 beam reporting is supported. In event-triggered beam reporting for mobility of Rel. 19, type 2-2 beam reporting is supported.

However, study of definitions related to event-based beam reporting according to a use case to be applied is not sufficient. Unless such study is sufficient, communication with lower latency cannot be performed, which may cause improvement of communication quality/throughput to be suppressed.

In view of these, the inventors of the present invention came up with the idea of a new method of event-triggered beam reporting.

Embodiments according to the present disclosure will be described in detail with reference to the drawings as follows. The radio communication methods according to respective embodiments may each be employed individually, or may be employed in combination.

### (Various Interpretations)

In the present disclosure, each word/phrase surrounded by "()" in a sentence may indicate a description about an immediately preceding word/phrase (for example, a description of spelling), rephrasing, a concrete example, a supplementary description, or the like. In the present disclosure, each word/phrase surrounded by "[]" in a sentence may be for understanding of meaning of the entire sentence including the word/phrase or understanding of meaning of the entire sentence without including (by ignoring) the word/phrase. Note that "()" and "[]" may be used for a use/meaning other than the above.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. The serving cell may be replaced with a cell that transmits a PDSCH. A candidate cell may mean a cell being a candidate for a serving cell by L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP in a CC, a BWP, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from the PCI of the current serving cell, another serving cell, and a target cell may be interchangeably interpreted. A target cell may be a cell selected from among a plurality of candidate cells. In the present disclosure, switch, change, and update may be interchangeably interpreted. A serving cell may be interpreted as a serving cell before switch or a serving cell after switch.

In the present disclosure, event-based beam reporting, event-triggered beam reporting, UE-triggered beam reporting, and UE-initiated beam reporting may be interchangeably interpreted.

In the present disclosure, event-triggered beam reporting may be simply referred to as beam reporting/CSI reporting/L1-RSRP/SINR beam reporting.

In the present disclosure, type 1 beam reporting and beam reporting for intra-cell beam switching may be interchangeably interpreted.

In the present disclosure, type 2 beam reporting and inter-cell beam reporting may be interchangeably interpreted.

In the present disclosure, type 2-1 beam reporting and beam reporting for inter-cell beam switching may be interchangeably interpreted.

In the present disclosure, type 2-2 beam reporting and beam reporting for cell switching may be interchangeably interpreted.

In the present disclosure, table, mapping, and association may be interchangeably interpreted.

In the present disclosure, a list and a pool may be interchangeably interpreted.

In the present disclosure, a (new) MAC CE, UCI, a cell switch command, a beam switch command, a MAC CE for beam reporting, and a MAC CE for cell switching may be interchangeably interpreted.

In the present disclosure, an event-based beam report may be reported on a PUSCH (for example, a configured grant PUSCH, a grant-based PUSCH). In other words, report contents in the present disclosure may be transmitted by using at least one of a MAC CE/UCI/PUCCH/PUSCH.

### (Radio Communication Method)

The embodiments of the present disclosure can be broadly classified as follows.
- 0th embodiment: trigger condition (event) of beam reporting.
- First embodiment: definition of wording for a specific event.
- Second embodiment: associations between TCI states and SSBs/CSI-RSs for measurement.
- Third embodiment: variations of events supported.
- Fourth embodiment: higher layer parameters for beam reporting.
- Fifth embodiment: beam reporting in units of BWPs/CCs.

Hereinafter, each embodiment will be described based on these.

In the present disclosure, the embodiments/options may each be employed individually or may be employed in combination of a plurality thereof.

### <0th Embodiment>

A 0th embodiment relates to a trigger condition (event) of beam reporting.

### <<Aspect 0-1>>

Event-triggered [L1] beam reporting may be triggered when a given condition (event) is satisfied. For example, a UE may apply different/same condition(s)/event(s) for the following beam reporting triggers.

- UE feature #1: Event-triggered [L1] beam reporting for MIMO of Rel. 19.
- UE feature #2: Event-triggered [L1] beam reporting for mobility of Rel. 19.

Different UE capabilities may be introduced/defined between UE features #1 and #2. Different higher layer parameters may be configured to enable the respective UE features. A UE feature and a UE capability may be interchangeably interpreted.

A UE does not expect that UE features #1 and #2 are simultaneously configured in a given BWP/CC/band/frequency band/frequency (or for each UE).

Alternatively, the UE may be simultaneously configured with UE features #1 and #2 in a given BWP/CC/band/frequency band/frequency (or for each UE). For example, the UE may be predefined with which event (which UE feature) to prioritize, if configured, or may be configured/indicated with this by higher layer signaling/physical layer signaling.

The present disclosure may be applied in a unified TCI framework (of Rel. 15/16/17/18).

The present disclosure may only be applied when a corresponding UE capability is reported. Alternatively, the present disclosure may be applied only when a corresponding higher layer parameter (for example, RRC) is notified/reported.

### <<Aspect 0-2>>

For event-triggered beam reporting for MIMO of Rel. 19, the following may be applied.

- MAC CE in PUSCH.
- UCI in a periodic/semi-persistent PUCCH, UCI in a dynamic grant (DG)/configured grant (CG) PUSCH.
- Relationship between a MAC CE-based method and a UCI-based method described above. For example, two independent methods may be configurable. Alternatively, UCI-based may be applicable in addition to MAC CE-based (combination of two methods (2-step method) may be applied).

Contents of a report may be basically the same as contents of an existing L1 beam measurement report, and may include at least one of the following, for example.
- SSBRI/CRI.
- The number X of beams to be reported.
- A method of selecting X beams.
- L1-RSRP/SINR for each SSBRI/CRI (absolute value/differential value).
In a case of using a MAC CE,
- indicator to indicate whether the next octet is included.
In a case of using a MAC CE or a case of using UCI,
- serving cell ID, a BWP ID (when activation of a TCI state or beam switching is requested by the report).

### <<Aspect 0-3>>

Regarding event-triggered beam reporting for mobility of Rel. 19, it is necessary to clarify whether to use the event-triggered beam reporting for reporting cell switching. For example, the following may be applied.

- MAC CE in a semi-persistent/aperiodic PUSCH.
- UCI in a periodic/semi-persistent PUCCH, UCI in a semi-persistent/aperiodic PUSCH.

Contents of a report may include, for example, at least one of the following.

When the measurement report is used for cell switching reporting, in addition to MIMO-related information,
- indicator indicating whether or not to perform cell switching, or TA-related information.

Otherwise (when the measurement report is not used for cell switching reporting),
- same contents as those of the MIMO-related information (which may be different only in terms of being either intra-cell/inter-cell).

Supported events may be similar to conditional handover (Conditional Hand-Over (CHO)).

For example, since a candidate cell(s) is configured based on an L3 measurement report, an L1-RSRP/SINR may be used as a threshold.

When the report is used for a cell switch command, a specific domain filter (for example, time/frequency/spatial) may be considered/applied to prevent frequent switching.

Whether flexibility of time (for example, 5 ms, 10 ms, 20 ms) for triggering is required may be defined.

According to this embodiment, a trigger condition (event) of beam reporting is clarified.

### <First Embodiment>

A First embodiment relates to definition of wording for a specific event.

In the existing events described above, definitions of a serving [cell] and a neighbor [cell] may be interpreted/updated as follows in event-triggered beam reporting for Rel. 19.

For example, a serving [cell], an SpCell, and a PCell in an existing L3 event and a current beam (for example, an RS ID associated with an indicated [joint/DL] TCI state) in event-triggered beam reporting for MIMO of Rel. 19 may be interchangeably interpreted.

A serving [cell], an SpCell, and a PCell in an existing L3 event and a current beam (for example, an RS ID associated with an indicated [joint/DL] TCI state) or a beam of a serving cell (for example, an RS ID associated with a TCI state for the PCI of the serving cell) in event-triggered beam reporting for mobility of Rel. 19 may be interchangeably interpreted.

A neighbor [cell] in an existing L3 event and another beam (for example, an RS ID not associated with an indicated [joint/DL] TCI state but associated with an RS ID for L1 beam measurement) in event-triggered beam reporting for MIMO (which may be mobility) in Rel. 19 may be interchangeably interpreted.

A neighbor [cell] in an existing L3 event and a beam of a non-serving cell/target cell/candidate cell (for example, an RS ID associated with a TCI state for the PCI of a target cell/candidate cell) in event-triggered beam reporting for mobility of Rel. 19 may be interchangeably interpreted.

A measurement value of each reference signal (RS) may be an RSRP/SINR, an L3-RSRP/SINR, an L1-RSRP/SINR, or a mean value of a plurality of L1-RSRPs/SINRs.

For example, an L1-RSRP/SINR may change dynamically. Hence, by averaging a plurality of (X) L1-RSRP/SINR values (for example, X = 5), it is possible to avoid control hunting (frequent switching of a trigger state) in triggering of beam reporting.

According to this embodiment, the correspondence between existing events and Rel-19 events is clarified for specific wording.

### <Second Embodiment>

A second embodiment relates to associations between TCI states and SSBs/CSI-RSs for measurement.

It is necessary to clarify how to associate a current indicated TCI state and an SSB/CSI-RS ID for L1 beam measurement.

### <<Aspect 2-1>>

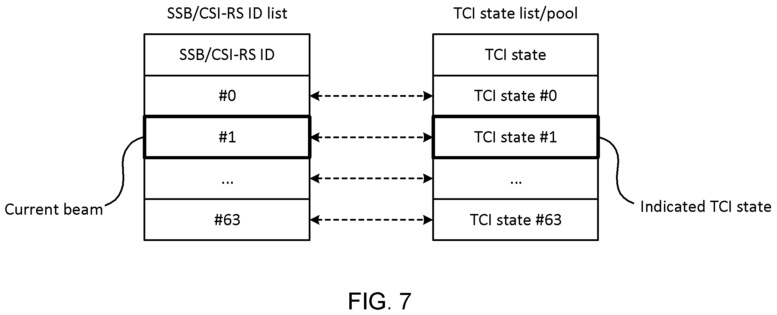

An association between a list of TCI states and a list of SSB/CSI-RS IDs for L1 beam measurement may be defined/configured. The association may be configured for/indicated to a UE. In other words, the UE may receive information related to the association. The UE may determine a correspondence between a TCI state and an SSB/CSI-RS, based on the association. FIG. 7 is a diagram to show an example of associations between SSBs/CSI-RSs and TCI states according to aspect 2-1.

### (Example 1)

The identical indices in the respective lists are associated with each other. For example, the second ID (SSB/CSI-RS ID #1) in the SSB/CSI-RS ID list and the second ID (TCI state #1) in the TCI state list may be associated with each other (see FIG. 7). As shown in FIG. 7, SSB/CSI-RS ID #1 corresponds to a current beam, and TCI state #1 corresponds to an indicated TCI state.

### (Example 2)

An association between the SSB/CSI-RS ID list and the TCI state list may be explicitly configured.

### (Notes)

A certain restriction may be applied to the association. For example, a specific RS in the list of SSB/CSI-RS IDs for L1 beam measurement may be associated with one RS of the source RSs in the TCI state list. The restriction may be applied when the RS types of the two lists are different from each other.

### <<Aspect 2-2>>

A current beam (specific RS ID in the list of SSB/CSI-RS IDs for L1 beam measurement) may be derived from (based on) the QCL source RS of a corresponding TCI state (indicated TCI state).

For example, when two RSs (two QCL types) are configured, a UE may select one of the RSs, based on the QCL type. In this case, the UE may select, for example, the RS of QCL type A.

The list of SSB/CSI-RS IDs for L1 beam measurement needs to include some limited RSs. For example, when the RS of QCL type A is always selected, the RS IDs [in the list] for L1 beam measurement need to correspond to TRSs.

Alternatively, when the UE can select QCL type D, the RS IDs [in the list] for L1 beam measurement need to correspond to TRSs/CSI-RSs with repetition.

In the present aspect, the UE does not expect that an SSB is configured as an RS for L1 beam measurement.

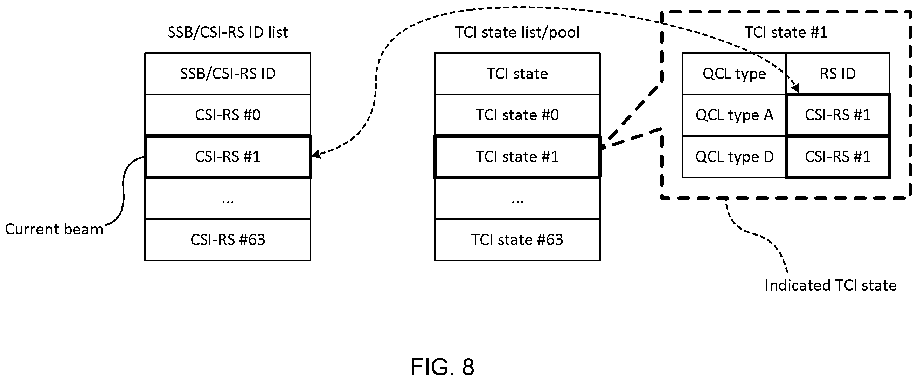

FIG. 8 is a diagram to show an example of associations between SSBs/CSI-RSs and TCI states according to aspect 2-2. As shown in FIG. 8, the identical indices of the respective lists are associated with each other.

For example, the second ID (SSB/CSI-RS ID #1) in the SSB/CSI-RS ID list and the second ID (TCI state #1) in the TCI state list may be associated with each other. SSB/CSI-RS ID #1 corresponds to a current beam, and TCI state #1 corresponds to an indicated TCI state.

In TCI state #1, two QCL types (QCL type A/D) may be associated with each RS ID (CSI-RS #1).

### <<Aspect 2-3>>

In mobility of Rel. 18, only SSB-based L1 beam measurement is supported (in other words, CSI-RS-based L1 beam measurement is not supported). Meanwhile, in mobility of Rel. 19, CSI-RS-based L1 beam measurement is supported.

However, in event-triggered beam reporting for MIMO/mobility of Rel. 19, it is not clear whether CSI-RS-based L1 beam measurement is supported.

Hence, the following is proposed to support L1 beam measurement in both SSB based and CSI-RS based cases.

When a UE is configured with an SSB as an RS for L1 beam measurement, an association between a list of SSB IDs for L1 beam measurement and a list of CSI-RS IDs ([list of] QCL source RSs in a TCI state) may be defined/configured. The association may be configured for/indicated to a UE. In other words, the UE may receive information related to the association.

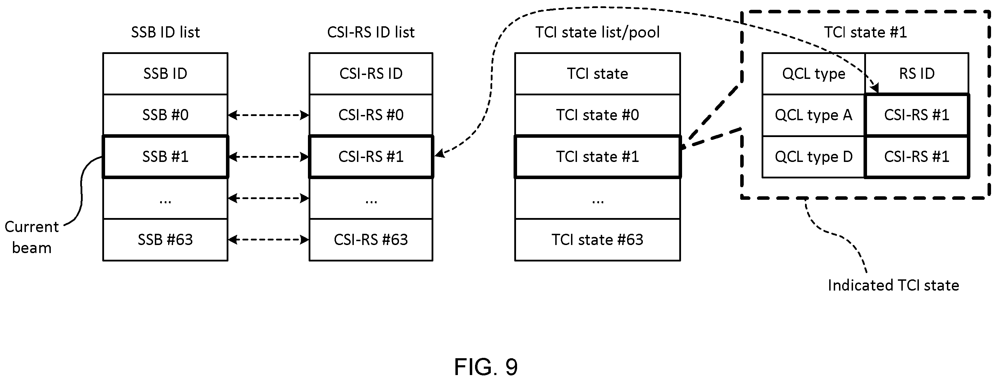

FIG. 9 is a diagram to show an example of associations between SSBs/CSI-RSs and TCI states according to aspect 2-3.

### (Example 1)

The identical indices in the respective lists are associated with each other. For example, the second ID (SSB #1) in the SSB ID list and the second ID (CSI-RS #1) in the CSI-RS ID list (TCI state list) may be associated with each other (see FIG. 9). As shown in FIG. 9, SSB/CSI-RS ID #1 corresponds to a current beam, and TCI state #1 corresponds to an indicated TCI state.

As shown in FIG. 9, in TCI state #1, two QCL types (QCL type A/D) may be associated with each RS ID (CSI-RS #1).

### (Example 2)

An association between the SSB/CSI-RS ID list and the CSI-RS ID list (TCI state list) may be explicitly configured.

According to this embodiment, associations (correspondences) between TCI states and SSB/CSI-RS IDs for measurement are clarified.

### <Third Embodiment>

A third embodiment relates to variations of events (conditions) supported.

All of the above-described events may be supported for MIMO/mobility of Rel. 19, or only some limited ones of the events may be supported. For example, when a UE is configured with event-triggered beam reporting for MIMO/mobility of Rel. 19, a limited event may be applied. An event set including a plurality of events may be defined.

In MIMO/mobility of Rel. 19, the same/different events/event sets may be supported. Which event/event set the UE applies may be predefined in a specification or may be configured/indicated by higher layer signaling/physical layer signaling.

A priority may be defined for each event/event set, and the UE may make determination, based on the priority. For example, the UE may preferentially apply an event with a high priority.

According to this embodiment, a UE can appropriately determine an event supported in MIMO/mobility of Rel. 19.

### <Fourth Embodiment>

A fourth embodiment relates to a higher layer parameter for beam reporting.

For each of the above-described events, a higher layer parameter (RRC) for indicating at least one of the values below may be configured.
- Event A1: threshold.
- Event A2: threshold.
- Event A3: offset.
- Event A4: threshold.
- Event A5: a plurality of thresholds (for example, threshold #1 and threshold #2).
- Event A6: offset.
- Event B1: threshold.
- Event B2: a plurality of thresholds (for example, threshold #1 and threshold #2).

For event-triggered beam reporting in MIMO/mobility of Rel. 19, it is necessary to clarify a method of configuring a necessary higher layer parameter (RRC), when at least one of the above events is supported. Examples of the method will be described below.

### (Example 1)

A higher layer parameter for existing L3 events is used.

### (Example 2)

A new higher layer parameter for event-triggered beam reporting in MIMO/mobility of Rel. 19 is introduced/defined. By defining a dedicated higher layer parameter, a UE can apply different values for existing L3 events and events for Rel. 19. For example, an offset for Rel. 19 may be smaller than an existing offset.

### (Example 2-1)

Higher layer parameters are the same, but candidate values may be different, between MIMO and mobility of Rel. 19.

### (Example 2-2)

Higher layer parameters and candidate values may be different between MIMO and mobility of Rel. 19.

A new timer and counter in the MAC layer may be defined/used instead of an existing time to trigger (TTT).

### <<Aspect 4-1A>>

For example, results of L1 beam measurement may vary frequently. Hence, a timer alone is not sufficient to perform reporting at appropriate timing. It is assumed that the interval of reporting is long in some cases. If the timer is shortened, this may cause an increase in communication overhead.

For example, a timer may be started when a threshold of RSRP/SINR is satisfied. When the counter satisfies a certain value (configured value) before the timer expires, the MAC layer notifies a lower layer of the fact. At this time, the UE performs reporting. When the timer expires, the counter is reset to zero.

The UE may perform reporting once or a plurality of times at a certain interval (configured interval).

One or a plurality of counters/timers may be configured for each event/BWP/CC/FR/band/UE.

The number of counters/timers may be configured/indicated by higher layer signaling/physical layer signaling, predefined in a specification, or determined according to UE capability.

### (Concrete Examples)

In existing operation, a timer is started when a condition is satisfied. When the timer ends (expires), the UE triggers event-triggered beam reporting (for example, based on event A3).

As described above, an L1 RSRP may change dynamically, and thus the timer may be canceled before it expires. Consequently, it is assumed that the UE triggers event-triggered beam reporting at all.

Thus, in the present disclosure, both a timer and a counter are applied to prevent a situation in which beam reporting is not triggered at all as described above.

More concretely, in the present disclosure, a timer is started when a condition is satisfied. When the counter counts a certain number of times (certain number) (count number exceeds the certain number) before the timer ends (expires), the UE triggers event-triggered beam reporting.

On the other hand, when the counter does not count the certain number of times (count number does not exceed the certain number) before the timer expires, the UE does not trigger event-triggered beam reporting.

The timer is counted (calculated) at [predefined/configured] certain periodicity. For example, the UE checks the condition every 1 millisecond and counts the counter when the condition is satisfied.

### <<Aspect 4-1B>>

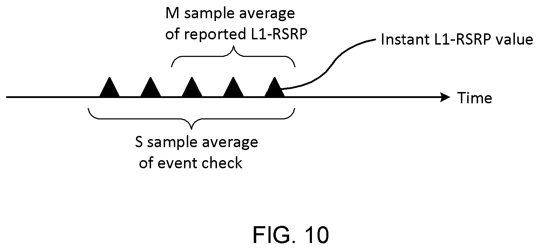

Each event may be checked by using the average value of L1-RSRPs/SINRs for the event/part of the event. FIG. 10 is a diagram to show an example of event-triggered beam reporting according to aspect 4-1B.

To check an event, the number S of samples for averaging L1-RSRPs/SINRs may be predefined or may be configured/indicated by higher layer signaling/physical layer signaling (for example, S = 5).

### (Variations)

There may be a case where the number of samples of L1-RSRPs/SINRs for an event check and the reported number of samples may be different from each other. In this case, the complexity of the processing on the UE side may increase. To address this, the following steps may be applied.

### - Step 1

No special processing is performed for the number of samples. In other words, the number S of samples for event check and the number M of samples for reporting may be different from each other (for example, S = 5, M = 3 (see FIG. 10)). For example, the UE may use the average L1-RSRP/SINR based on S samples, for event check, and report the average L1-RSRP/SINR, based on M samples.

### - Step 2

The number M of samples for reporting follows the number S of samples for event check. For example, when the UE uses the average L1-RSRP/SINR based on S samples, for event check, the UE may report the average L1-RSRP/SINR based on the S samples. In this case, the UE does not need to store two values (average L1-RSRPs/SINRs) for event check and reporting, which can save memory.

### - Step 3

The UE does not expect the values of S and M to be different from each other. In other words, the UE may expect that the values of S and M are the same.

### (Other Variations)

A UE may perform event check every time the UE obtains S samples, instead of using the average L1-RSRP/SINR based on the S samples for the event check. In other words, the UE may perform the event check once every S times, instead of performing the event check every time the UE obtains a sample.

In other words, the periodicity of the event check may be different from the periodicity of sample acquisition. For example, the periodicity of the event check may be longer (for example, 100 milliseconds) than the periodicity of the sample acquisition (for example, 20 milliseconds).

In this case, since the average value is not used, the UE does not need to store the sample value each time, which can save memory.

According to this aspect, a UE can appropriately rigger beam reporting.

### <Fifth Embodiment>

A fifth embodiment relates to beam reporting in units of BWPs/CCs.

However, it is not clear in which BWP/CC an L1-RSRP/SINR is measured and event check is performed.

For example, a UE does not need to measure an L1-RSRP/SINR or perform event check in all BWPs/CCs.

Normally, all CCs in one band are co-located, and all BWPs/CCs in one band use (apply) the same beam (for example, TCI state ID). Hence, it is sufficient for the UE to perform L1-RSRP/SINR measurement in one BWP/CC in one band for event check.

In view of this, aspects 5-1 to 5-3 below are proposed.

### <<Aspect 5-1>>

The following features may be configured for each BWP/CC/cell group/band/FR/UE.
- UE feature #1: Event-triggered [L1] beam reporting for MIMO of Rel. 19.
- UE feature #2: Event-triggered [L1] beam reporting for mobility of Rel. 19.

### <<Aspect 5-2>>

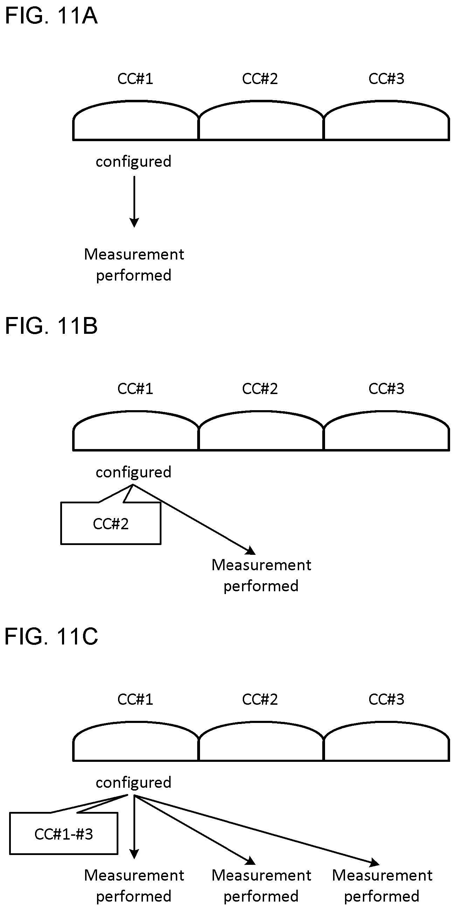

When at least one of the following is configured, a UE may perform L1-RSRP/SINR measurement according to the configuration and perform event check. FIG. 11A to FIG. 11C are diagrams to show examples of event-triggered beam reporting according to aspect 5-2.

### (5-2-A): BWP/CC

- When one BWP/CC is configured for the UE, the UE may perform L1 beam measurement and event check on the BWP/CC (see FIG. 11A). In this case, a configuration including a BWP/CC ID for performing the L1 beam measurement is not necessary (the UE need not receive a configuration of a BWP/CC for the L1 beam measurement). Note that when the BWP/CC is configured in a cell group, the BWP/CC ID (for L1 beam measurement) may be included in the configuration.

### (5-2-B): Same/Different BWPs/CCs

- When a given BWP/CC is configured for the UE, the UE may perform L1 beam measurement and event check on a BWP/CC same as/different from the given BWP/CC. In this case, the UE may receive a configuration including a BWP/CC ID (for L1 beam measurement) for performing L1 beam measurement. For example, as shown in FIG. 11B, when CC #1 is configured for the UE, the UE may perform L1 beam measurement and event check in CC #2 different from CC #1.

### (5-2-C): Plurality of BWPs/CCs

- When a plurality of BWPs/CCs (for example, CCs #1 to #3) are configured for the UE, the UE may perform L1 beam measurement and event check on the plurality of BWPs/CCs (see FIG. 11C). In this case, the UE may receive a configuration including a BWP/CC ID (for L1 beam measurement) (list including a plurality of BWP/CC IDs) for performing L1 beam measurement.

### <<Aspect 5-3>>

For the event-triggered beam reporting for MIMO/mobility of Rel. 19, the UE may control report contents (which information to include in the report) according to at least one of the following. For example, the UE may control report contents (whether to include a BWP/CC ID), based on the number of configured BWPs/CCs.

### (5-3-A)

When only one BWP/CC for performing event-triggered beam reporting is configured, the UE need not include a BWP/CC ID in report contents (reported information). This is because an NW (gNB) can recognize a corresponding BWP/CC (configured BWP/CC) without notification of the BWP/CC ID.

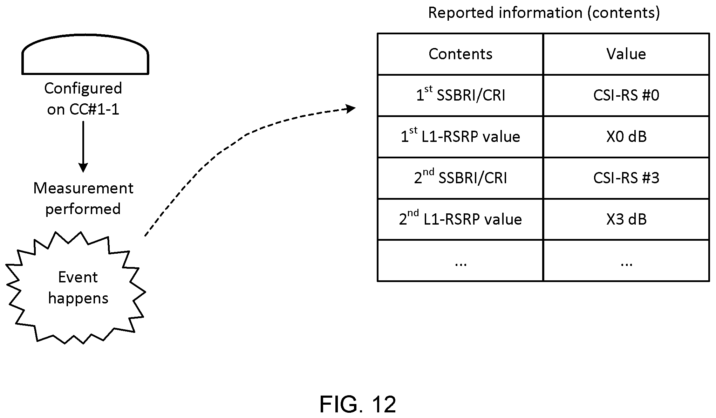

FIG. 12 is a diagram to show an example of event-triggered beam reporting according to aspect 5-3A. As shown in FIG. 12, when one CC #1-1 is configured, a UE performs L1 beam measurement in CC #1-1. The UE performs beam reporting with the occurrence of a specific event as a trigger. In this case, reported information (report contents) may include an SSBRI/CRI and the value of an L1-RSRP/SINR and need not include a BWP/CC ID.

### (5-3-B)

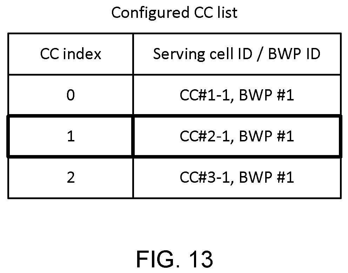

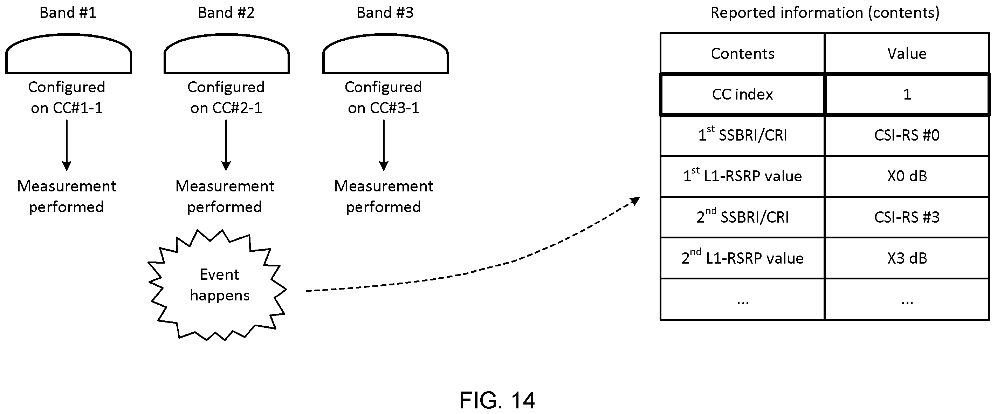

The UE may include a BWP/CC ID in report contents. FIG. 13 and FIG. 14 are diagrams to show examples of event-triggered beam reporting according to aspect 5-3B.

As described above, in event-triggered beam reporting for MIMO/mobility of Rel. 19, different bands may be configured. In this case, notification about in which band (BWP/CC) an event has occurred need be made by beam reporting.

Information on a BWP/CC ID may always be reported or may be reported only when a specific condition is satisfied. The specific condition may be, for example, that one or more CCs are configured to perform L1 beam measurement.

To be more specific, as shown in FIG. 13 and FIG. 14, a case is assumed where L1 beam measurement for event-triggered beam reporting is performed in CCs #1-1, #2-1, and #3-1 (corresponding to CC indices 0 to 2, respectively). For example, when a specific event occurs in CC #2-1, event-triggered beam reporting may include information on CC #2-1. Examples of the information may be as follows.

As shown in FIG. 13, a CC list configured by RRC may include serving cell IDs/BWP IDs. In beam reporting, a specific index in the CC list may be included in UCI/MAC CE.

The maximum size of the CC list (the maximum number of CCs included in the list) may be predefined in a specification (for example, up to 8).

The bit size of the UCI/MAC CE indicating the index of the CC list may be fixed (for example, 3 bits) or may be variable (for example, 0 to 3 bits) depending on the number of configured CCs in the CC list.

The UCI/MAC CE for event-triggered beam reporting may include a serving cell ID/BWP ID.

As shown in FIG. 14, when a CC is configured for each band (CC #1-1 for band #1, CC #2-1 for band #2, and CC #3-1 for band #3), the UE performs L1 beam measurement on each of CCs #1-1, #2-1, and #3-1. For example, when a specific event has occurred in CC #2-1, the UE performs beam reporting with the occurrence of the event as a trigger. In this case, the reported information (report contents) may include a BWP/CC ID (value of CC index), a CCSSBRI/CRI, and the value of an L1-RSRP/SINR as information on CC #2-1.

### (Variations)

In a case of event-triggered beam reporting by UCI, a field for a CC index may be added to the UCI.

In a case of event-triggered beam reporting by a MAC CE, a field for a CC index may be added to the MAC CE.

In the event-triggered beam reporting, a field for an SSBRI/CRI may be added. The SSBRI/CRI may indicate to which BWP/CC the reporting corresponds. In this case, a separate field for BWP/CC is not needed. Hence, in the report, the field of a CC index may be deleted from (need not be included in) report contents.

According to this embodiment, a UE can appropriately control beam reporting in units of BWPs/CCs.

### <Supplements>

### <<Notification of Information to UE>>

Notification of any information [from a network (NW) (for example, a base station (BS))] to a UE (in other words, any reception, in a UE, of information from a BS) in the above-described embodiments may be performed by using physical layer signaling (for example, DCI), higher layer signaling (for example, RRC signaling, MAC CE), a specific signal/channel (for example, PDCCH, PDSCH, reference signal), or any combination of them.

When the notification is performed by using a MAC CE, the MAC CE may be identified by a new logical channel ID (LCID) not defined in an existing standard being included in a MAC subheader.

When the notification is performed by using DCI, the notification may be performed by using a specific field of the DCI, a radio network temporary identifier (RNTI) used for scrambling of cyclic redundancy check (CRC) bits given to the DCI, the format of the DCI, or the like.

Notification of any information to a UE in the above-described embodiments may be performed periodically, semi-persistently, or aperiodically.

### <<Notification of Information from UE>>

Notification of any information from a UE [to a NW] (in other words, transmission/reporting, by a UE, of any information to a BS) in the above-described embodiments may be performed by using physical layer signaling (for example, UCI), higher layer signaling (for example, RRC signaling, MAC CE), a specific signal/channel (for example, PUCCH, PUSCH, PRACH, reference signal), or any combination of them.

When the notification is performed using a MAC CE, the MAC CE may be identified by a new LCID not defined in existing standards being included in a MAC subheader.

When the notification is performed using UCI, the notification may be transmitted by using a PUCCH or a PUSCH.

Notification of any information from a UE in the above-described embodiments may be performed periodically, semi-persistently, or aperiodically.

### <<Application of Respective Embodiments>>

In a UE/BS, specific (one or a plurality of) processing/operation/control/assumption/information for at least one embodiment of the above-described embodiments may be applied (may be used) in a case where any one or more of conditions below are satisfied.
- A higher layer parameter indicating the specific processing/operation/control/assumption/information is configured.
- The specific processing/operation/control/assumption/information is determined based on a related higher layer parameter.
- The specific processing/operation/control/assumption/information is indicated/activated/triggered by a MAC CE / DCI / UCI/ resource / channel / RS.
- A specific UE capability indicating (or related to) the specific processing/operation/control/assumption/information is reported or supported.
- Application of the specific processing/operation/control/assumption/information is judged based on a specific condition.

The specific UE capability may indicate at least one of the following:
- supporting of specific processing/operation/control information for at least one of the embodiments above.
- supporting of event-triggered beam reporting.
- supporting of type 1/2/2-1/2-2 beam reporting.
- supporting of MIMO/mobility of Rel. 19 or later versions.

The specific UE capability described above may be capability applied across all the frequencies (commonly regardless of frequency), capability per frequency (for example, one or combinations of a cell, a band, a band combination, a BWP, a component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

In a case where none of the conditions described above is satisfied, the UE/BS may follow an operation defined in an existing 3GPP release.

### (Supplementary Notes)

Regarding one embodiment (for MIMO of the zeroth to fourth embodiments) of the present disclosure, the following supplementary notes of the invention will be given.

### {Supplementary Note 1}

A terminal including:
a receiving section that receives a configuration for beam measurement; and
a control section that controls triggering of beam reporting based on a specific event and performs control to include a result of the beam measurement in the beam reporting, wherein
the specific event is based on a result of comparison between a measurement result of a current or another beam and a threshold.

### {Supplementary Note 2}

The terminal according to supplementary note 1, wherein
the receiving section receives an association between a list of transmission configuration indication (TCI) states and a list of reference signal (RS) IDs for beam measurement, and
the control section determines a correspondence between a TCI state and an RS, based on the association.

### {Supplementary Note 3}

The terminal according to supplementary note 1 or 2, wherein
the receiving section receives a configuration for a timer and a counter for triggering the beam reporting, and
the control section controls triggering of the beam reporting, based on the timer and the counter.

### {Supplementary Note 4}

The terminal according to any one of supplementary note 1 to 3, wherein
the receiving section receives a configuration related to the number of samples of beam measurement results for event check, and
the control section uses an average value of the beam measurement results based on the number of samples, for event check, to perform control to report an average value of beam measurement results based on the number of samples different from the number of samples used.

### (Supplementary Notes)

Regarding one embodiment (for mobility of the zeroth to fourth embodiments) of the present disclosure, the following supplementary notes of the invention will be given.

### {Supplementary Note 1}

A terminal including:
a receiving section that receives a configuration for beam measurement; and
a control section that controls triggering of beam reporting based on a specific event and performs control to include a result of the beam measurement in the beam reporting, wherein
the specific event is based on a result of comparison between a measurement result of a beam of a serving cell or a candidate cell and a threshold.

### {Supplementary Note 2}

The terminal according to supplementary note 1, wherein the beam reporting is type 2-2 beam reporting.

### {Supplementary Note 3}

The terminal according to supplementary note 1 or 2, wherein the beam corresponds to a reference signal (RS) ID associated with a transmission configuration indication (TCI) state for a physical cell ID of a given cell.

### {Supplementary Note 4}

The terminal according to any one of supplementary notes 1 to 3, wherein
the receiving section receives an association between a list of transmission configuration indication (TCI) states and a list of reference signal (RS) IDs for beam measurement,
the control section determines a correspondence between a TCI state and an RS, based on the association, and
RSs of a plurality of quasi co-location (QCL) types are associated with the TCI state.

### (Supplementary Notes)

Regarding one embodiment (for MIMO of the fifth embodiment) of the present disclosure, the following supplementary notes of the invention will be given.

### {Supplementary Note 1}

A terminal including:
a receiving section that receives a configuration for beam measurement for each component carrier (CC); and
a control section that performs beam measurement according to the configuration, and controls triggering of beam reporting, based on a specific event, wherein
the specific event is based on a result of comparison between a measurement result of a current or another beam and a threshold.

### {Supplementary Note 2}

The terminal according to supplementary note 1, wherein, when one given CC is configured for beam measurement, the control section performs beam measurement and event check in the CC configured or in a different CC.

### {Supplementary Note 3}

The terminal according to supplementary note 1 or 2, wherein, when a plurality of CCs are configured for beam measurement, the control section performs beam measurement and event check in the plurality of CCs.

### {Supplementary Note 4}

The terminal according to any one of supplementary notes 1 to 3, wherein the control section controls a report content, based on the number of CCs configured.

### (Supplementary Notes)

Regarding one embodiment (for mobility of the fifth embodiment) of the present disclosure, the following supplementary notes of the invention will be given.

### {Supplementary Note 1}

A terminal including:
a receiving section that receives a configuration for beam measurement for each component carrier (CC); and
a control section that performs beam measurement according to the configuration, and controls triggering of beam reporting, based on a specific event, wherein
the specific event is based on a result of comparison between a measurement result of a beam of a serving cell or a candidate cell and a threshold.

### {Supplementary Note 2}

The terminal according to supplementary note 1, wherein the beam reporting is type 2-2 beam reporting.

### {Supplementary Note 3}

The terminal according to supplementary note 1 or 2, wherein the beam corresponds to a reference signal (RS) ID associated with a transmission configuration indication (TCI) state for a physical cell ID of a given cell.

### {Supplementary Note 4}

The terminal according to any one of supplementary notes 1 to 3, wherein the control section performs control not to include, when the number of CCs to be configured is one, a corresponding CC ID in a report contents, and to include, when the number of CCs to be configured is more than one, a CC ID for which a specific event has occurred, in report contents.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

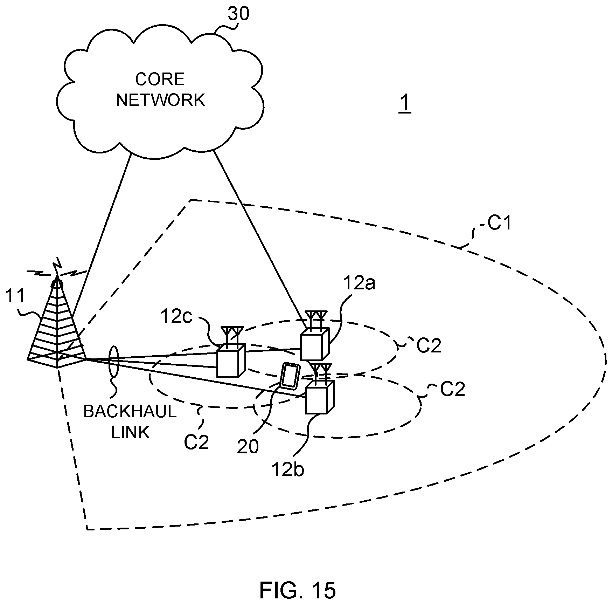

FIG. 15 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, the shape, the size, and the like of the cells and user terminals 20 are by no means limited to the aspect shown in the diagram. Hereinafter, the base stations 11 and 12 will be collectively referred to as "base stations 10," unless specified otherwise.

Note that the radio communication system 1 may use Multi Input Multi Output (MIMO). For example, one cell may be formed by one antenna/base station 10 or may be formed by a plurality of antennas/base stations 10. One [virtual] cell (which may be referred to as, for example, a super cell) may be constituted by a plurality of [virtual] cells (which may be referred to as, for example, subcells). The super cell may correspond to a cell with a fixed physical range, and the sub-cells may each correspond to a cell with a physical range that fluctuates semi-statically/dynamically. In this case, the radio communication system 1 may be referred to as a cell-free system.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2/Xn interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

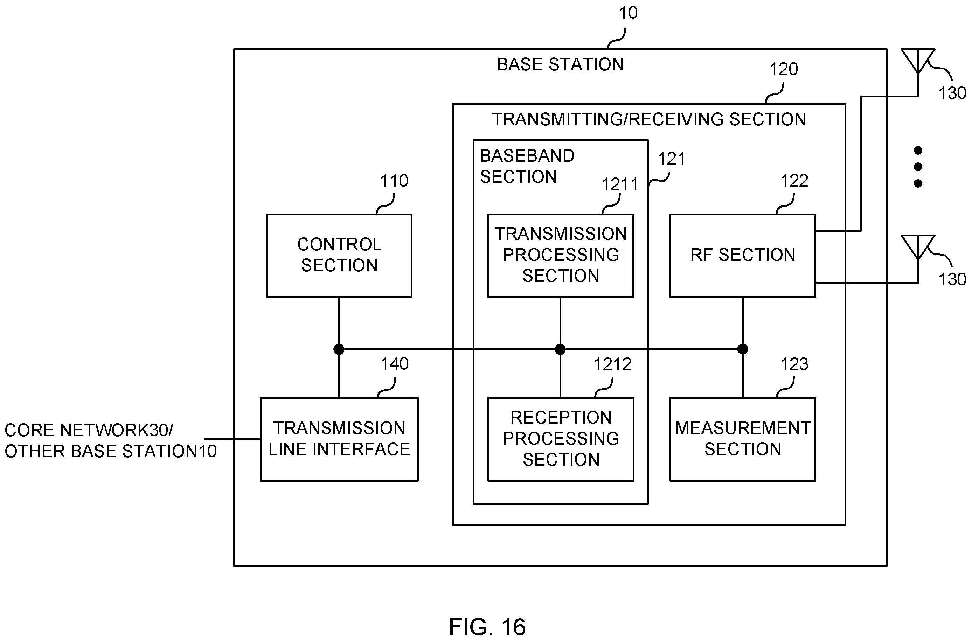

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the base station 10 may be divided into three elements that are a radio unit (RU), a distributed unit (DU), and a central unit (CU). For example, the RU may implement RF processing (such as digital beam forming, digital-analogue conversion, and analogue beam forming) and physical layer lower functions (such as precoding, IFFT, and FFT). The DU may implement physical layer higher functions (such as from coding to resource element mapping), MAC layer functions, and RLC layer functions. The CU may implement functions of a PDCP layer, a Service Data Adaptation Protocol (SDAP) layer, and an RRC layer.

In the present disclosure, the base station 10 may include one apparatus that implements all the RU, DU, and CU functions or may include a plurality of apparatuses connected to each other that each implement part of the RU, DU, and CU functions. In the present disclosure, the base station 10 and the RU/DU/CU may be interchangeably interpreted.

Note that the transmitting/receiving section 120 may transmit a configuration for beam measurement. The control section 110 may perform control to receive, from a terminal, a result of the beam measurement included in beam reporting triggered based on a specific event The specific event may be based on a result of comparison between a measurement result of a current or another beam and a threshold. The specific event may be based on a result of comparison between a measurement result of a serving cell or a candidate cell and a threshold.

The transmitting/receiving section 120 may transmit a configuration for beam measurement for each component carrier (CC). The control section 110 may perform control to receive, from a terminal, a result of the beam measurement performed according to the configuration, in beam reporting triggered based on a specific event The specific event may be based on a result of comparison between a measurement result of a current or another beam and a threshold. The specific event may be based on a result of comparison between a measurement result of a serving cell or a candidate cell and a threshold.

### (User Terminal)

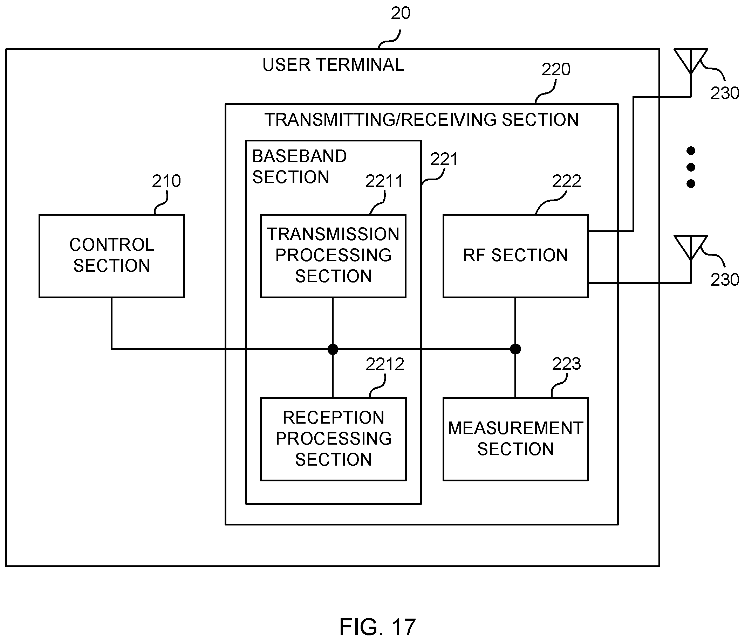

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration for beam measurement. The control section 210 may control triggering of beam reporting based on a specific event and perform control to include a result of the beam measurement in the beam reporting. The specific event may be based on a result of comparison between a measurement result of a current or another beam and a threshold. The transmitting/receiving section 220 may receive an association between a list of transmission configuration indication (TCI) states and a list of reference signal (RS) IDs for beam measurement. The control section 210 may determine a correspondence between a TCI state and an RS, based on the association. The transmitting/receiving section 220 may receive a configuration for a timer and a counter for triggering the beam reporting. The control section may control triggering of the beam reporting, based on the timer and the counter. The transmitting/receiving section 220 may receive a configuration related to the number of samples of beam measurement results for event check. The control section 210 may use an average value of the beam measurement results based on the number of samples, for event check, to perform control to report an average value of beam measurement results based on the number of samples different from the number of samples used.

The transmitting/receiving section 220 may receive a configuration for beam measurement. The control section 210 may control triggering of beam reporting based on a specific event and perform control to include a result of the beam measurement in the beam reporting. The specific event may be based on a result of comparison between a measurement result of a serving cell or a candidate cell and a threshold. The beam reporting may be type 2-2 beam reporting. The beam may correspond to a reference signal (RS) ID associated with a transmission configuration indication (TCI) state for a physical cell ID of a given cell. The transmitting/receiving section 220 may receive an association between a list of transmission configuration indication (TCI) states and a list of reference signal (RS) IDs for beam measurement. The control section 210 may determine a correspondence between a TCI state and an RS, based on the association. RSs of a plurality of quasi co-location (QCL) types may be associated with the TCI state.

The transmitting/receiving section 220 may receive a configuration for beam measurement for each component carrier (CC). The control section 210 may perform beam measurement according to the configuration and control triggering of beam reporting based on a specific event. The specific event may be based on a result of comparison between a measurement result of a current or another beam and a threshold. When one given CC is configured for beam measurement, the control section 210 may perform beam measurement and event check in the CC configured or in a different CC. When a plurality of CCs are configured for beam measurement, the control section 210 may perform beam measurement and event check in the plurality of CCs. The control section 210 may control a report content, based on the number of CCs configured.

The transmitting/receiving section 220 may receive a configuration for beam measurement for each component carrier (CC). The control section 210 may perform beam measurement according to the configuration and control triggering of beam reporting based on a specific event. The specific event may be based on a result of comparison between a measurement result of a serving cell or a candidate cell and a threshold. The beam reporting may be type 2-2 beam reporting. The beam may correspond to a reference signal (RS) ID associated with a transmission configuration indication (TCI) state for a physical cell ID of a given cell. The control section 210 may perform control not to include, when the number of CCs to be configured is one, a corresponding CC ID in a report content, and to include, when the number of CCs to be configured is more than one, a CC ID for which a specific event has occurred, in a report content.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

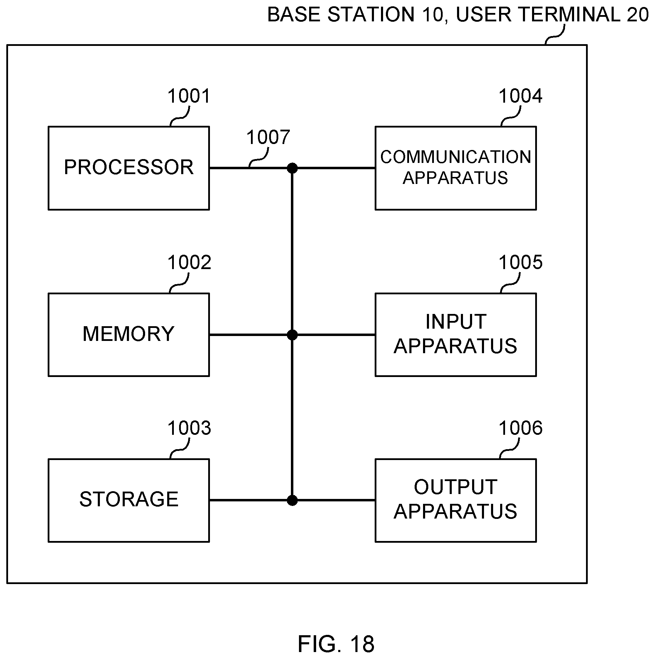

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

It should be noted that an apparatus (e.g., a network node providing NF) included in the core network 30 may also be realized by the functional blocks / hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE / base station) to any second device (e.g., base station / UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

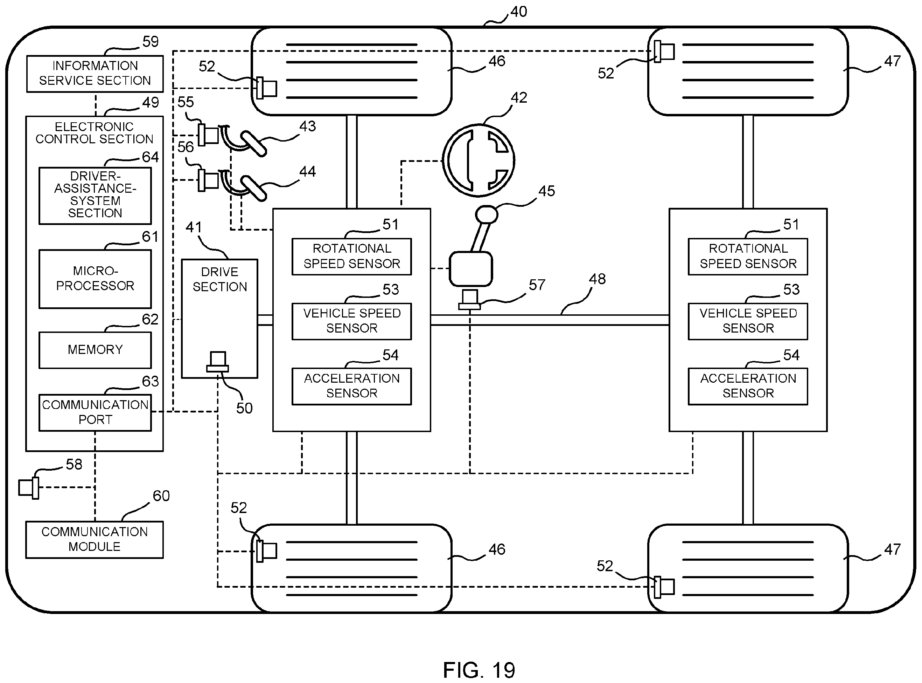

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...", "..." (if "..." above is a to-infinitive, this "..." is a verb without "to"), or the like. "Does not expect ..." may be used interchangeably with "be not expected ...", "does not ..." (if "..." above is a to-infinitive, this "..." is a verb without "to"), or the like. Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration for beam measurement for each component carrier (CC); and
a control section that performs beam measurement according to the configuration, and controls triggering of beam reporting, based on a specific event, wherein
the specific event is based on a result of comparison between a measurement result of a beam of a serving cell or a candidate cell and a threshold.

2. The terminal according to claim 1, wherein
the beam reporting is type 2-2 beam reporting.

3. The terminal according to claim 1, wherein
the beam corresponds to a reference signal (RS) ID associated with a transmission configuration indication (TCI) state for a physical cell ID of a given cell.

4. The terminal according to claim 1, wherein
the control section performs control not to include, when the number of CCs to be configured is one, a corresponding CC ID in a report content, and to include, when the number of CCs to be configured is more than one, a CC ID for which a specific event has occurred, in a report content.

5. A radio communication method for a terminal, the radio communication method comprising:
receiving a configuration for beam measurement for each component carrier (CC); and
performing beam measurement according to the configuration, and controlling triggering of beam reporting, based on a specific event, wherein
the specific event is based on a result of comparison between a measurement result of a beam of a serving cell or a candidate cell and a threshold.

6. A base station comprising:
a transmitting section that transmits a configuration for beam measurement for each component carrier (CC); and
a control section that performs control to receive, from a terminal, a result of the beam measurement performed according to the configuration, in beam reporting triggered based on a specific event, wherein
the specific event is based on a result of comparison between a measurement result of a beam of a serving cell or a candidate cell and a threshold.
